# EUROPEAN PATENT SPECIFICATION

(11) **EP 3 455 778 B1**
(45) Date of publication and mention of the grant of the patent: **09.09.2020**
(21) Application number: 17712903.8
(22) Date of filing: 08.03.2017
(51) Int. Cl.: G06F 21/57, H04L 29/06, H04W 12/08, H04W 12/12

(54) **ELECTRONIC DEVICE BASED SECURITY MANAGEMENT BACKGROUND**
AUF ELEKTRONISCHER VORRICHTUNG BASIERENDE SICHERHEITSVERWALTUNG
ARRIÈRE-PLAN DE GESTION DE SÉCURITÉ SUR UNE BASE DE DISPOSITIF ÉLECTRONIQUE

(30) Priority: 13.05.2016 US 201615154549
(43) Date of publication of application: 20.03.2019
(73) Proprietor: Qualcomm Incorporated, San Diego, CA 92121-1714 (US)
(72) Inventor: KOGANTI, Sudheer, San Diego, California 92121 (US); BAPST, Mark, San Diego, California 92121 (US); JAKOBSSON, Bjorn, San Diego, California 92121 (US); MILIKICH, George, San Diego, California 92121 (US)
(74) Representative: Howe, Steven
(86) International application number: PCT/US2017/021262
(87) International publication number: WO 2017/196440

(56) References cited:
- WO-A1-2016/014593
- US-A1- 2010 048 167
- US-A1- 2013 239 175
- US-B1- 9 313 211
- WEISS RICHARD ET AL: "Trust Evaluation in Mobile Devices: An Empirical Study", 2015 IEEE TRUSTCOM/BIGDATASE/ISPA, IEEE, vol. 1, 20 August 2015 (2015-08-20), pages 25-32, XP032819616, DOI: 10.1109/TRUSTCOM.2015.353 [retrieved on 2015-12-02]

## Description

### BACKGROUND

Nefarious activities and configurations of an electronic device may circumvent data security protections on the electronic device. As an example, malicious code executing on the device and device settings intended to breach data security may pose threats to the security of the device and reduce a trust associated with the device. Further, the diminished security and/or trust of the electronic device may negatively impact user privacy and/or privacy or security of electronic device assets (e.g., data, software, and/or hardware assets). A security policy may provide responses to security threats to the device which may reduce or eliminate the security threats and/or reduce or eliminate present and/or future security losses. Often, the responses to security threats include disabling user access to the device as a whole (e.g., disabling continued operation of the device). Additionally, typically a server, for example a mobile device management (MDM) server enforces the security policy on the device. In such a client-server security management system, the server provides threat and response information to the device and/or remotely controls device operation and/or access to device assets. The server may provide and enforce the security policy for a group of managed client electronic devices. In the client-server security system, the server may monitor crowd-sourcing threat information received from the group of managed client devices for evidence of security threats. Based on the crowd-sourcing information, the server may detect the presence of global security threats to the group of managed client devices. For example, the crowd-sourcing information may include information regarding malware and/or bugs in previously distributed software (e.g., many electronic devices and/or the users of the electronic devices report the compromised software to the server).

WO2016/014593 A1 discloses a mobile computing device security client that monitors and detects inconsistencies in device security. The security client may provide a notification and perform an actuation in response to detection of a change in operating conditions of the mobile computing device that is inconsistent with security policies for the mobile computing device. A user notification may provide the user with an opportunity to select an action to take in response to the potential security breach. Actuations include response actions to mitigate the compromise in security based on the operating conditions. The security policies may include security policies associated with hardware peripheral use, an application whitelist, an application blacklist, and/or firewall security settings. The security client may maintain associations between operating condition inconsistencies and notifications and/or actuations to be performed. US9313211 B1 discloses a computer-implemented method for protecting against a vulnerability event. A first set of security policies is enforced by a client device that monitors for a vulnerability event. Upon detecting a vulnerability event, a vulnerability level corresponding to a current environment is determined, a second set of security policies is selected based on the vulnerability level and the second set of security policies is enforced. US2010/048167 A1 discloses a method for adjusting security status on a mobile device comprising collecting security-related contextual information which includes information of nearby mobile devices and/ or the geographic location of the intelligent mobile device; evaluating a threat level based on the collected security-related contextual information; invoking a security policy; and adjusting the security status of the mobile device based on the threat level and the security policy.

### SUMMARY

The invention is defined by the independent claims. Advantageous embodiments thereof are defined in the respective dependent claims.

An example of a method of providing security for an electronic device according to the disclosure includes monitoring, by the electronic device, a status of the electronic device for one or more threats to a security of the electronic device, detecting, by the electronic device, the one or more threats to the security of the electronic device based on the status of the electronic device and on one or more security policies associated with the electronic device, and self-enforcing, by the electronic device, the one or more security policies by implementing one or more targeted security actions, as indicated by the one or more security policies, to selectively alter the status of the electronic device, based on the detected one or more threats to the security of the electronic device.

Implementations of such a method may include one or more of the following features. The method may include calculating, by a device trust management service (DTMS) local to the electronic device, one or more trust scores based on the status of the electronic device and on the one or more security policies associated with the electronic device, detecting, by the DTMS, the one or more threats to the security of the electronic device based on the one or more trust scores and the one or more security policies, and selecting, by the DTMS, the one or more targeted security actions based on the detected one or more threats to the security of the electronic device. The method may include receiving, by the DTMS, security threat information from one or more applications configured to execute on the electronic device and calculating, by the DTMS, the one or more trust scores based on the security threat information from the one or more applications. The method may include implementing the one or more targeted security actions by a device trust management service local to the electronic device, wherein the one or more targeted security actions modify operations of an operating system, one or more applications, or a combination thereof. The method may include implementing the one or more targeted security actions by a device trust management service local to the electronic device, wherein the one or more targeted security actions modify access, for at least one of an operating system or one or more applications, to one or more of stored content, sensors, a communication network, a remote host, an input/output device, or a combination thereof. The method may include receiving a query from at least one of an application or a service configured to execute on the electronic device, at a device trust management service (DTMS) local to the electronic device, for security threat information for the electronic device, providing, by the DTMS, the security threat information to the at least one of the application or the service, and implementing the one or more targeted security actions by the at least one of the application or the service, wherein the targeted security actions modify operations of the application or the service. The method may include implementing the one or more targeted security actions by at least one of a browser application, a media player application, or a network connection service. The method may include monitoring one or more of a location status, a device attestation status, a user authentication status, a hardware tampering status, a web access status, a malware status, a network connectivity status, an application threat status, or a combination thereof.

An example of an electronic device according to the disclosure includes a memory and a processor coupled to the memory, the processor configured to monitor a status of the electronic device for one or more threats to a security of the electronic device, detect the one or more threats to the security of the electronic device based on the status of the electronic device and on one or more security policies associated with the electronic device, and self-enforce the one or more security policies by being further configured to implement one or more targeted security actions, as indicated by the one or more security policies, to selectively alter the status of the electronic device, based on the detected one or more threats to the security of the electronic device.

Implementations of such an electronic device may include one or more of the following features. The processor may include a device trust management service (DTMS), the DTMS configured to calculate one or more trust scores based on the status of the electronic device and on the one or more security policies associated with the electronic device, detect the one or more threats to the security of the electronic device based on the one or more trust scores and the one or more security policies, and select the one or more targeted security actions based on the detected one or more threats to the security of the electronic device. The DTMS may be further configured to receive security threat information from one or more applications configured to execute on the electronic device and calculate the one or more trust scores based on the security threat information from the one or more applications. The processor may include an operating system, one or more applications, and a device trust management system (DTMS), the DTMS configured to implement the one or more targeted security actions, wherein the one or more targeted security actions modify operations of the operating system, the one or more applications, or a combination thereof. The processor may include an operating system, one or more applications, and a device trust management system (DTMS), the DTMS configured to implement the one or more targeted security actions, wherein the one or more targeted security actions modify access, for at least one of the operating system or the one or more applications, to one or more of stored content in the memory, sensors of the electronic device, a communication network communicatively coupled to the electronic device, a remote host communicatively coupled to the electronic device, an input/output device communicatively coupled to the electronic device, or a combination thereof. The processor may include a device trust management service (DTMS) and at least one of an application or a service, wherein the DTMS is configured to receive a query from the at least one of the application or the service for security threat information for the electronic device and provide the security threat information to the at least one of the application or the service and the at least one of the application or the service is configured to implement the one or more targeted security actions, wherein the targeted security actions modify operations of the one or more applications. The at least one of the application or the service may include at least one of a browser application, a media player application, or a network connection service. The processor may be further configured to monitor one or more of a location status, a device attestation status, a user authentication status, a hardware tampering status, a web access status, a malware status, a network connectivity status, an application threat status, or a combination thereof.

An example of an electronic device according to the disclosure includes means for monitoring, by the electronic device, a status of the electronic device for one or more threats to a security of the electronic device, means for detecting, by the electronic device, the one or more threats to the security of the electronic device based on the status of the electronic device and on one or more security policies associated with the electronic device, and means for self-enforcing, by the electronic device, the one or more security policies by implementing one or more targeted security actions, as indicated by the one or more security policies, to selectively alter the status of the electronic device, based on the detected one or more threats to the security of the electronic device.

Implementations of such an electronic device may include one or more of the following features. The electronic device may include means for calculating, by the electronic device, one or more trust scores based on the status of the electronic device and on the one or more security policies associated with the electronic device, means for detecting, by the electronic device, the one or more threats to the security of the electronic device based on the one or more trust scores and the one or more security policies, and means for selecting, by the electronic device, the one or more targeted security actions based on the detected one or more threats to the security of the electronic device. The electronic device may include means for receiving, by the electronic device, security threat information from one or more applications configured to execute on the electronic device and means for calculating, by the electronic device, the one or more trust scores based on the security threat information from the one or more applications. The electronic device may include means for implementing the one or more targeted security actions by the electronic device, wherein the one or more targeted security actions modify operations of an operating system, one or more applications, or a combination thereof. The electronic device may include means for implementing the one or more targeted security actions by the electronic device, wherein the one or more targeted security actions modify access, for at least one of an operating system or one or more applications, to one or more of stored content, sensors, a communication network, a remote host, an input/output device, or a combination thereof. The electronic device may include means for receiving, by the electronic device, a query from at least one of an application or a service, configured to execute on the electronic device, for security threat information for the electronic device, means for providing, by the electronic device, the security threat information to the at least one of the application or the service, and means for implementing the one or more targeted security actions by the at least one of the application or the service, wherein the targeted security actions modify operations of the at least one of the application or the service. The means for monitoring the status of the electronic device may include means for monitoring one or more of a location status, a device attestation status, a user authentication status, a hardware tampering status, a web access status, a malware status, a network connectivity status, an application threat status, or a combination thereof.

An example of a non-transitory, processor-readable storage medium according to the disclosure includes a non-transitory, processor-readable storage medium having stored thereon processor-readable instructions for providing security for an electronic device, the processor-readable instructions being configured to cause a processor of the electronic device to monitor a status of the electronic device for one or more threats to a security of the electronic device, detect the one or more threats to the security of the electronic device based on the status of the electronic device and on one or more security policies associated with the electronic device, and self-enforce the one or more security policies by being further configured to implement one or more targeted security actions, as indicated by the one or more security policies, to selectively alter the status of the electronic device, based on the detected one or more threats to the security of the electronic device.

Implementations of such a non-transitory, processor-readable storage medium may include one or more of the following features. The non-transitory, processor readable storage medium may include processor-readable instructions that are further configured to cause the processor of the electronic device to calculate one or more trust scores based on the status of the electronic device and on the one or more security policies associated with the electronic device, detect the one or more threats to the security of the electronic device based on the one or more trust scores and the one or more security policies, and select the one or more targeted security actions based on the detected one or more threats to the security of the electronic device. The processor-readable instructions may be further configured to cause the processor of the electronic device to receive security threat information from one or more applications configured to execute on the electronic device and calculate the one or more trust scores based on the security threat information from the one or more applications. The processor-readable instructions may be further configured to cause the processor of the electronic device to implement the one or more targeted security actions, wherein the one or more targeted security actions modify operations of an operating system configured to execute on the electronic device, one or more applications configured to execute on the electronic device, or a combination thereof. The processor-readable instructions may be further configured to cause the processor of the electronic device to implement the one or more targeted security actions, wherein the one or more targeted security actions modify access, for at least one of an operating system configured to execute on the electronic device or one or more applications configured to execute on the electronic device, to one or more of stored content in a memory of the electronic device, sensors of the electronic device, a communication network communicatively coupled to the electronic device, a remote host communicatively coupled to the electronic device, an input/output device communicatively coupled to the electronic device, or a combination thereof. The processor-readable instructions may be further configured to cause the processor of the electronic device to receive a query from at least one of an application or a service configured to execute on the electronic device for security threat information for the electronic device and provide the security threat information to the at least one of the application or the service, and cause the at least one of the application or the service to implement the one or more targeted security actions, wherein the targeted security actions modify operations of the at least one of the application or the service. The processor-readable instructions may be further configured to cause the processor of the electronic device to monitor one or more of a location status, a device attestation status, a user authentication status, a hardware tampering status, a web access status, a malware status, a network connectivity status, an application threat status, or a combination thereof.

Items and/or techniques described herein may provide one or more of the following capabilities. An electronic device monitors its own configuration and operations for one or more threats to the security and/or trust of the electronic device. The threats may include behavior and/or configurations of software, firmware, and/or hardware that violate at least a portion of a security policy or multiple security policies associated with the particular electronic device. The threats may further include behavior and/or configurations of the software, firmware, and/or hardware that increase a vulnerability of the electronic device to violations of the security policies. Self-monitoring for the one or more threats may enable the electronic device to detect threats without relying on receiving threat information from a server. This localized, client-based (i.e., device based) threat detection (e.g., self-detection, autonomous detection) may enable the electronic device to detect and respond to the threat in a shorter amount of time than in a client-server security management system. In contrast, a security action response by a server based on a threat to a group of client devices may require detection of the threat by multiple client devices prior to implementation of the targeted security action response by the server. Further, the client-based threat detection may enable the particular electronic device to autonomously discover and respond to a localized threat (i.e., threats not affecting and/or not known to be affecting other electronic devices). The localized client-based detection and enforcement (e.g., self-detection, self-enforcement, autonomous detection, autonomous enforcement) may also reduce a number of false positives. Threat detection algorithms reliant on statistical analysis of crowd-sourcing data may be susceptible to such false positives. The false positive may be, for example, a device operation and/or configuration erroneously determined to be threats to the device security. A device based security management system may trigger self-enforcement of the security policy by the electronic device without any command, instruction and/or other information regarding security responses being received from a server. The localized detection and enforcement may prevent the threatened device from communicating with external entities to the detriment of those external entities. The device based security management system may implement a security response targeted at a particular security vulnerability of the electronic device. In this way, unthreatened device assets may not be affected by the targeted security action which may enhance user convenience. For example, a security response to a privacy threat involving the microphone may block access to the microphone without blocking access to file storage, camera, etc. The device based security management system may reduce a fragmentation of security solutions often associated with MDM systems. In a bring-your-own-device (BYOD) environment, the MDM systems may need to accommodate a wide variety of devices and device brands by offering a range of information technology security solutions. In contrast, the device based security management system described herein may be incorporated into processors used in a variety of devices and/or device brands. Thus the various BYOD workforce devices may all include the same device based security management system. Such a device based security management system enables the devices to self-enforce security policies and may remove or reduce the need for the MDM systems.

Other capabilities may be provided and not every implementation according to the disclosure must provide any, let alone all, of the capabilities discussed. Further, it may be possible for an effect noted above to be achieved by means other than that noted and a noted item/technique may not necessarily yield the noted effect.

### BRIEF DESCRIPTIONS OF THE DRAWINGS

FIG. 1 is a schematic diagram of an example of a network communications system.
FIG. 2 is a block diagram of hardware components of the electronic device shown in FIG 1.
FIG. 3 is a block diagram of a system architecture for implementing electronic device based security management.
FIG. 4 is a block diagram of a method of providing security for an electronic device.

### DETAILED DESCRIPTION

Techniques are presented for providing security for an electronic device. An electronic device monitors a status of the electronic device for one or more threats to a security of the electronic device. The status may include operations of and/or configurations of the electronic device. The operations of the electronic device include operating system and/or application operations. The configurations of the electronic device include software, firmware, and hardware configurations. The electronic device detects the one or more threats based on the monitored status and on one or more security policies associated with the electronic device. In response to the detected threats, the electronic device self-enforces the one or more security policies. The electronic device self-enforces these policies by implementing one or more targeted security actions according to the one or more security policies. The targeted security actions may selectively alters operations and/or restricts access to device assets. The electronic device monitors for the threats, detects the threats, and implements the targeted security actions in response to the threats without assistance in these regards from an external server.

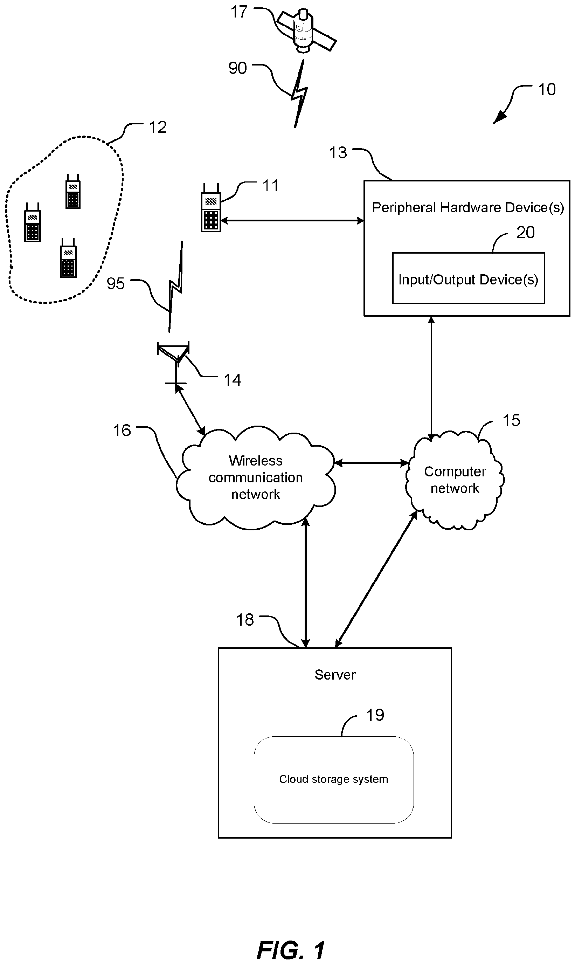

Referring to FIG. 1, a schematic diagram of a network communications system 10 is shown. The network communications system 10 includes an electronic device 11, one or more other electronic devices 12, peripheral hardware device(s) 13, input/output devices 20, a network access device 14, a computer network 15, a wireless communication network 16, a Satellite Positioning System (SPS) satellite 17, a server 18, and a cloud storage system 19. A quantity of each component in FIG. 1 is an example only and other quantities of each, or any, component could be used.

The electronic device 11 is an electronic computing device and/or system. Although shown as a mobile phone in FIG. 1, the electronic device 11 may be another electronic device. Examples of the electronic device 11 include, but are not limited to, a mainframe, a mini-computer, a server, a workstation, a set-top box, a personal computer, a laptop computer, a mobile device, a hand-held device, a wireless device, a navigation device, an entertainment appliance, a tablet, a modem, an electronic reader, a personal digital assistant, an electronic game, an automobile, an aircraft, a machinery, or a combination thereof. Claimed subject matter is not limited to a particular type, category, size, etc., of electronic device.

The electronic device 11 may be a target electronic device and the system 10 may include one or more other electronic devices 12. The one or more other electronic devices 12 may provide crowd sourcing information to the electronic device 11, the wireless communication network 16, the computer network 15 and/or the server 18. The one or more other electronic devices 12 may be communicatively coupled (e.g., via a wired and/or a wireless communications link) to one or more of the target electronic device 11, the peripheral hardware device(s) 13, the wireless communication network 16, the computer network 15 and/or the server 18. Although shown as mobile phones in FIG. 1, the one or more other electronic devices 12 may be electronic devices as previously described. Further the one or more other electronic devices 12 may be a group of devices that includes all of the same type of electronic devices or different types of electronic devices.

The peripheral hardware device(s) 13 may include one or more of a router, a modem, and/or or other hardware providing connectivity to the computer network 15, input/output devices 20 (e.g., a printer, a mouse, a keyboard, a touch pad, a joy stick, a storage device, an external drive, etc.), a sensor, and/or another electronic device (e.g., a mainframe, a mini-computer, a server, a workstation, a set-top box, a personal computer, a laptop computer, a mobile device, a hand-held device, a wireless device, a navigation device, an entertainment appliance, a tablet, an electronic reader, a personal digital assistant, an electronic game, an automobile, an aircraft, a machinery, etc. or a combination thereof).

The network access device 14 may be a base station, an access point, a femto base station, etc. The base station may also be referred to as, for example, a NodeB or an eNB (e.g., in the context of an LTE wireless network), etc. The network access device 14 may transmit network signals 95 for use in wireless communications.

The wireless communication network 16 may be communicatively coupled to the electronic device 11, the peripheral hardware device(s) 13, the network access device 14, the computer network 15, and/or the server 18. The wireless communication network 16 may include, but is not limited to, a wireless wide area network (WWAN), a wireless local area network (WLAN), a wireless personal area network (WPAN), and so on. The term "network" and "system" may be used interchangeably herein. A WWAN may be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, and so on. A CDMA network may implement one or more radio access technologies (RATs) such as cdma2000, Wideband-CDMA (W-CDMA), Time Division Synchronous Code Division Multiple Access (TD-SCDMA), to name just a few radio technologies. Here, cdma2000 may include technologies implemented according to IS-95, IS-2000, and IS-856 standards. A TDMA network may implement Global System for Mobile Communications (GSM), Digital Advanced Mobile Phone System (D-AMPS), or some other RAT. GSM and W-CDMA are described in documents from a consortium named "3rd Generation Partnership Project" (3GPP). Cdma2000 is described in documents from a consortium named "3rd Generation Partnership Project 2" (3GPP2). 3GPP and 3GPP2 documents are publicly available. A WLAN may include an IEEE 802.11x network, and a WPAN may include a Bluetooth network, an IEEE 802.15x, for example. Wireless communication networks may include so-called next generation technologies (e.g., "4G"), such as, for example, Long Term Evolution (LTE), Advanced LTE, WiMax, Ultra Mobile Broadband (UMB), and/or the like.

The computer network 15 may include a mobile switching center and a packet data network (e.g., an Internet Protocol (IP) network referred to herein as the Internet). Although shown separately, the computer network 15 may be a portion of the wireless communication network 16.

The server 18 may be, for example, but not limited to, a network server, a positioning server, an enterprise server, a server associated with a particular website and/or application, a cloud network server, or a combination thereof. Although only one server 18 is shown in FIG. 1 for simplicity, other quantities of servers (e.g., one or more servers or a plurality of servers) could be used. The server 18 is a computing device including at least one processor and a memory and is configured to execute computer executable instructions. For example, the server 18 may be a computer system including a processor, non-transitory memory, a display, and a data input mechanism for a user. The processor is preferably an intelligent device, e.g., a personal computer central processing unit (CPU) such as those made by Intel® Corporation or AMD®, a microcontroller, an application specific integrated circuit (ASIC), etc. The memory may include random access memory (RAM) and read-only memory (ROM). The memory includes a non-transitory processor-readable storage medium (or media) that stores processor-readable, processor-executable software code containing one or more instructions or code for controlling the processor to perform functions described herein. The software can be loaded onto the memory by being downloaded via a network connection, uploaded from a disk, etc. Further, the software may not be directly executable, e.g., requiring compiling before execution. The network access device 14 may communicate with the server 18 and can retrieve information for use by the electronic device 11. The configuration of the server 18 as a remote server is exemplary only and not a limitation. In an embodiment, the server 18 may be connected directly to the network access device 14, or the functionality may be included in the network access device 14. The server 18 can include one or more databases. In an example, the server 18 is comprised of multiple server units. The multiple server units may be administered by one or more enterprises.

The server 18 may include or contribute to a cloud storage system 19. The cloud storage system 19 may reside on one or more servers in a cloud server network. The one or more servers may be communicatively coupled in order to provide cloud computing and cloud storage services to the electronic device 11 via the wireless communication network 16 and/or the computer network 15. Cloud computing allows a user of the electronic device 11 to perform computing tasks where data, applications, and even complete virtualized computing systems are accessed via the wireless communication network 16 and/or the computer network 15. The network of servers and connections used to provide the cloud computing service is generally referred to as "the cloud." Cloud storage provides an abstraction for physical storage devices. Cloud storage generally involves delivering data storage as a service, often billed on a usage basis. That is, cloud storage allows users to store and access data files somewhere in "the cloud," without knowing the details of where files are stored or having to manage the physical storage devices. In the cloud storage system 19, capacity can be available on demand and files can be made available on a global basis.

The SPS satellite 17 includes suitable logic, circuitry, and code to generate and send radio-frequency (RF) SPS signals 90 that may be received at the electronic device 11 for use in determining an SPS-based position of the electronic device 11. The SPS may include such systems as the Global Positioning System (GPS), Galileo, Glonass, Compass, Quasi-Zenith Satellite System (QZSS) over Japan, Indian Regional Navigational Satellite System (IRNSS) over India, Beidou over China, etc., and/or various augmentation systems (e.g., an Satellite Based Augmentation System (SBAS)) that may be associated with or otherwise enabled for use with one or more global and/or regional navigation satellite systems. By way of example but not limitation, an SBAS may include an augmentation system(s) that provides integrity information, differential corrections, etc., such as, e.g., Wide Area Augmentation System (WAAS), European Geostationary Navigation Overlay Service (EGNOS), Multi-functional Satellite Augmentation System (MSAS), GPS Aided Geo Augmented Navigation or GPS and Geo Augmented Navigation system (GAGAN), and/or the like. In some embodiments, the techniques/procedures presented herein are not restricted to global systems (e.g., GNSS) for SPS. For example, the techniques provided herein may be applied to or otherwise enabled for use in various regional systems, such as, e.g., Quasi-Zenith Satellite System (QZSS) over Japan, Indian Regional Navigational Satellite System (IRNSS) over India, Beidou over China, etc., and/or various augmentation systems (e.g., a Satellite Based Augmentation System (SBAS)) that may be associated with or otherwise enabled for use with one or more global and/or regional navigation satellite systems. By way of example but not limitation, an SBAS may include an augmentation system(s) that provides integrity information, differential corrections, etc., such as, e.g., Wide Area Augmentation System (WAAS), European Geostationary Navigation Overlay Service (EGNOS), Multi-functional Satellite Augmentation System (MSAS), GPS Aided Geo Augmented Navigation or GPS and Geo Augmented Navigation system (GAGAN), and/or the like. Thus, as used herein, an SPS may include any combination of one or more global and/or regional navigation satellite systems and/or augmentation systems, and SPS signals may include SPS, SPS-like, and/or other signals associated with such one or more SPS.

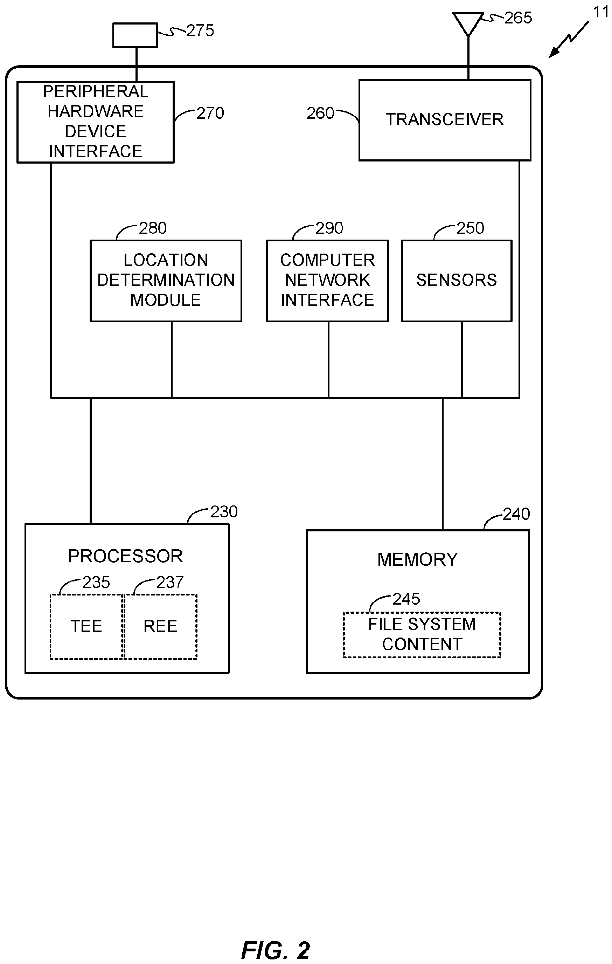

Referring to FIG. 2, with further reference to FIG. 1, a block diagram of hardware components of the electronic device 11 is shown. A quantity of each component in FIG. 2 is an example only and other quantities of each, or any, component could be used. The electronic device 11 includes a processor 230, a memory 240, sensors 250, a transceiver 260, an antenna 265, a peripheral hardware device interface 270, a peripheral hardware device connector 275, a location determination module 280, and a computer network interface 290. The components 230, 240, 250, 260, 265, 270, 275, 280, and 290 are communicatively coupled (directly and/or indirectly) to each other for bi-directional communication. Although shown as separate entities in FIG. 2, the components 230, 240, 250, 260, 265, 270, 275, 280, and 290 may be combined into one or more discrete components and/or may be part of the processor 230.

The sensors 250 include, for example, but not limited to, one or more of a camera, a microphone, a fingerprint scanner, a retinal scanner, a biometric sensor, an accelerometer, a magnetometer, a light sensor, a proximity sensor, a gyroscope, a pressure sensor, a thermometer, a spectrometer, a touchscreen, a mouse, a keyboard, etc. The sensors 250 may be used individually or in combination and the sensors 250 may be able to operate independently or interdependently.

The transceiver 260 can send and receive wireless signals via the antenna 265 over one or more wireless networks, for example, the wireless communication network 16 in FIG. 1. The electronic device 11 is illustrated as having a single transceiver 260. However, an electronic device 11 can alternatively have multiple transceivers 260 and antennas 265 to support multiple communication standards such as Wi-Fi, Code Division Multiple Access (CDMA), Wideband CDMA (WCDMA), Long Term Evolution (LTE), Bluetooth, etc. The transceiver 260 may also be configured to enable the electronic device 11 to receive the SPS signals 90 (e.g., from the SPS satellite 17 in FIG. 1) that the electronic device 11 may use to determine the location information. The transceiver 260 may be further configured to enable the electronic device 11 to communicate and exchange information, either directly or indirectly with other communications network entities, including but not limited to, the other electronic devices 12.

The peripheral hardware device interface 270 communicatively couples the electronic device 11 to the peripheral hardware device(s) 13, including the input/output devices 20. The communicative coupling enables the electronic device 11 to send and/or receive information to and/or from the peripheral hardware device(s) 13. The communicative coupling may be a wired connection using the peripheral hardware device connector 275. In an implementation, the peripheral hardware device connector 275 may be one or more universal serial bus (USB) ports. Together, the peripheral hardware device connector 275 and at least a portion of the peripheral hardware device interface 270 may provide the functions of a USB hub. These functions may include, but are not limited to, charging (e.g., providing electrical current to charge a battery) and/or data transmission/reception. Additionally or alternatively, the communicative coupling between the electronic device 11 and the peripheral hardware device(s) 13 may be a wireless connection (e.g., via the transceiver 260 and the antenna 265).

The location determination module 280 is configured to communicate with the transceiver 260 and the processor 230 to process SPS signals 90 and/or network signals 95 to obtain location information for the electronic device 11. The location information may include indoor information, outdoor information, context information, routing information, mapping information, etc.

The computer network interface 290 may include appropriate hardware, including one or more processors (not shown), configured to enable coupling and/or communications between the electronic device 11 and the computer network 15. The computer network interface 290 may include a network interface card (NIC) to enable Internet protocol (IP) communication. The computer network interface 290 may provide modem capabilities for the electronic device 11.

The processor 230 is a physical processor (i.e., an integrated circuit configured to execute operations on the electronic device 11 as specified by software and/or firmware). The processor 230 may be an intelligent hardware device, e.g., a central processing unit (CPU), one or more microprocessors, a controller or microcontroller, an application specific integrated circuit (ASIC), a general-purpose processor, a digital signal processor (DSP), a field programmable gate array (FPGA) or other programmable logic device, a state machine, discrete gate or transistor logic, discrete hardware components, or any combination thereof designed to perform the functions described herein and operable to carry out instructions on the electronic device 11. The processor 230 may be one or more processors and may be implemented as a combination of computing devices (e.g., a combination of DSP and a microprocessor, a plurality of microprocessors, one or more microprocessors in conjunction with a DSP core, or any other such configuration). The processor 230 may include multiple separate physical entities that may be distributed in the electronic device 11.

The processor 230 is operably coupled, respectively, to the memory 240. The processor 230 along with memory 240 may be components of a system-on-chip (SoC). The processor 230 either alone, or in combination with the memory 240, provides means for performing functions as described herein, for example, executing code or instructions stored in the memory 240. The memory 240 refers generally to any type of computer storage medium, including but not limited to RAM, ROM, FLASH, disc drives, fuse devices, etc. The memory 240 may be long term, short term, or other memory associated with the electronic device 11 and is not to be limited to any particular type of memory or number of memories, or type of media upon which memory is stored. The memory 240 includes a non-transitory, processor-readable storage media that stores processor executable and processor-readable instructions (i.e., software code) that are configured to, when executed, cause the processor 230 to perform various functions described herein (although the description may refer only to the processor 230 performing the functions). Alternatively, the software code may not be directly executable by the processor 230 but configured to cause the processor 230, e.g., when compiled and executed, to perform the functions. The memory 240 may include file system content 245. The file system content 245 may include user and application information, for example, but not limited to, image information, mail and/or text message information, location information, user notes, user contacts, user calendar, music, recipes, electronic books, search strings, passwords, etc. The file system content 245 may be stored as or in a folder, a file, or a memory partition storage area. The folder, file, and memory partition storage area are portions of the file system content 245.

The processor 230 may support a system-wide trusted execution environment (TEE) 235 security technology. Example implementations of the TEE 235 include, but are not limited to, Open Source TEE (OP-TEE) and QUALCOMM® Secure Extension Environment (QSEE), Intel® TXT, and AMD® Secure Execution Environment. The TEE security platform partitions hardware and software resources of the processor 230 and the memory 240 to create a secure world processing environment and a non-secure world processing environment. The non-secure world processing environment is typically referred to as a Rich Execution Environment (REE) 237. The TEE 235 and the REE 237 may be embedded in one processor or in separate processors. The TEE 235 is a security focused execution environment designed to store and manipulate sensitive information and to keep this information private from the REE 237.

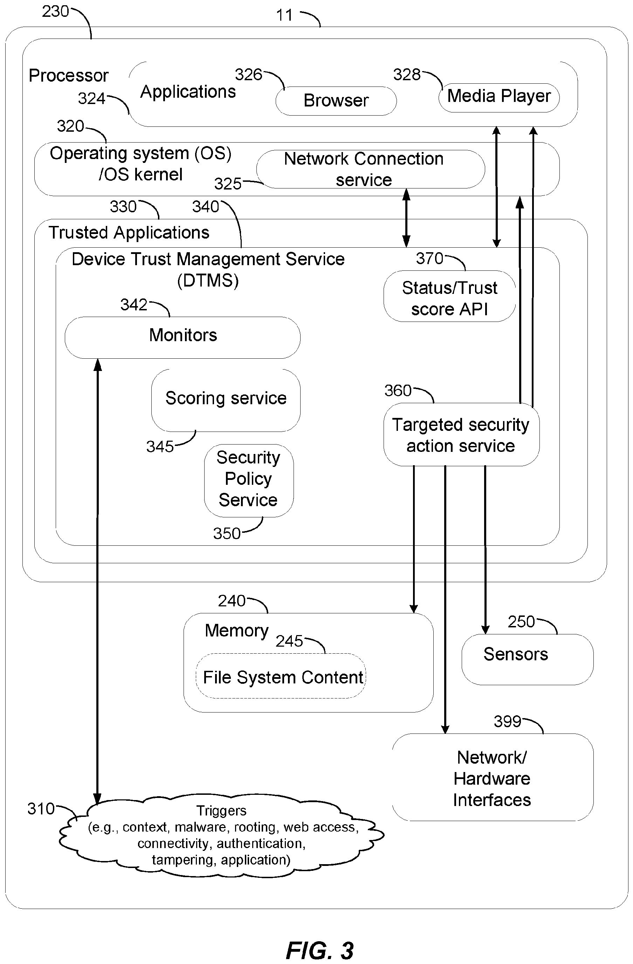

Referring to FIG. 3, with further reference to FIGS. 1-2, a system architecture for implementing electronic device based security management is shown. The processor 230 of the electronic device 11 supports an operating system (OS)/OS kernel 320. The REE 237, as discussed above with regard to FIG. 2, may support the OS/OS kernel 320. Examples of the OS/OS kernel 320 include, but are not limited to iOS®, Android®, Windows®, Blackberry®, Chrome®, Linux®, Symbian®, Palm®, etc. The OS/OS kernel may support a network connection service 325. The network connection service 325 may include executable instructions for connecting (e.g., via a wired and/or wireless connection) the electronic device 11 to various networks, for example but not limited to, a virtual private network (VPN), a local area network, the computer network 15. For example, the network connection service 325 may connect the electronic device 11 to a network via a public Wi-Fi hotspot device. The OS/OS kernel 320 further supports applications 324. The OS/OS kernel 320 provides common services to the applications 324 and administers switching operations between the applications 324. The applications 324 may be original equipment manufacturer (OEM) applications and/or third party applications and may include a browser application (e.g., browser 326) and a media player application (e.g., media player 328). Third party applications may be applications downloaded or otherwise obtained by the user for use on the electronic device 11. The TEE 235, as discussed above with regard to FIG. 2, may support the trusted applications 330. The trusted applications 330 may export security related functionality to the applications 324.

The trusted applications 330 may include a device trust management service (DTMS) 340 (e.g., means for monitoring a status, means for detecting one or more threats, means for self-enforcing one or more security policies, means for calculating one or more trust scores, means for selecting one or more targeted security actions, means for receiving security threat information, means for implementing one or more targeted security actions, means for receiving a query from one or more applications, means for providing security threat information). The DTMS 340 may manage threats to security, trust, privacy and/or health of the electronic device by monitoring for these threats, detecting these threats, and implementing actions responsive to the detected threats. The DTMS 340 is local to the electronic device 11. In this way, the DTMS 340 may provide device based security for the electronic device 11. In contrast, an MDM service, for example, may provide remote trust management services The DTMS 340 may enable the electronic device 11 to self-enforce one or more security policies. As described in further detail below, the DTMS 340 may interact with other components of the electronic device 11 to monitor for the threats, detect the threats, and implement the targeted security actions. As further described below, the DTMS 340 may also work cooperatively with applications 324 and enable the applications to contribute detected threat information and to implement their own targeted security actions. The DTMS 340 includes monitors 342, a scoring service 345, a security policy service 350, a targeted security action service 360, and a status/trust score application program interface (API) 370. The components 342, 345, 350, 360, and 370 of the DTMS 340 work cooperatively and may exchange information with one another.

The monitors 342 monitor a status of the electronic device 11 for one or more threats to the security and/or trust of the electronic device. As examples, the status of the electronic device 11 may include a location status, a device attestation status, a user authentication status, a hardware tampering status, a web access status, a malware status, a rooting status, a network connectivity status, an application threat status, or a combination thereof. In order to monitor these statuses, the monitors 342 may observe operations and/or configurations of the OS/OS kernel 320, the applications 324, and/or the components 230, 240, 250, 260, 265, 270, 275, 280, and 290 as shown in FIG. 2. The monitors 342 may monitor for particular operations and/or configurations that may be indicative of a reduction in the security and/or trust associated with the electronic device 11. The operations of the electronic device 11 may include actions (i.e., executed instructions) of the OS/OS kernel 320 and/or of the applications 324. The operations of the electronic device 11 may further include access requests from the OS/OS kernel 320 and/or from the applications 324. The configurations of the electronic device 11 may include software, firmware, and/or hardware configurations, network connections, location services configurations, authentication configurations, web access configurations, and website configurations. Access to the memory 240, the sensors 250, and the networks (e.g., wireless communication network 16, computer network 15) for the OS/OS kernel 320 and/or the applications 324 may increase a vulnerability of the electronic device 11 to security threats.

In an implementation, the monitors 342 may be configured to execute a set of one or more detection algorithms in order to monitor for device security threats. The detection algorithms may provide a run-time integrity test of software and/or firmware of the electronic device 11. The run-time integrity test may verify the integrity of the software and/or firmware during the execution thereof. The run-time integrity test may detect manipulation and/or modification of the program code. Such manipulation or modification may originate from intentional malicious conduct of someone intent on manipulating the program code to perform some unauthorized task. Additionally, modifications to the program code may occur from unintentional causes such as hardware or software failures. The output of the detection algorithms may be a flag or other indication of a failed integrity test (i.e., at installation, launch, or run-time). In addition to the run-time integrity test algorithms, the monitors 342 may also be configured to execute detection algorithms and/or machine learning algorithms that monitor operations of the OS/OS kernel 320 and device behavior at system boot and at software and/or firmware installation and/or launch. The monitors 342 may be further configured to monitor a connection status of the peripheral hardware device connector 275 and/or a transmission/reception status of the computer network interface 290 and/or the transceiver 260. The monitors 342 may be additionally or alternatively configured to monitor an access status for the file system content 245 and/or the sensors 250, to monitor the location determination module 280 for location information for the electronic device 11, and/or monitor user information (e.g., authentication and authorization information) determined by the processor 230 and/or the TEE 235.

The monitors 342 may monitor the context and/or location of the electronic device for the location status of the electronic device 11. For example, the monitors 342 may monitor operations and/or configurations of the location determination module 280. A particular detected context or location and/or a detected change in the context or location may trigger the evaluation of the security risk associated with the detected context or location and/or context or location change.

The monitors 342 may monitor the operations of the OS/OS kernel 320 and/or the applications 324 for the malware status and/or the rooting status. The monitors 342 may monitor processor activities for execution of malware or other malicious instructions (e.g., instructions pertaining to key logging, text input requests, etc.), idle time, etc. Detection of malware and/or rooting may trigger the evaluation of the security risk associated with the malware and/or the rooting.

The monitors 342 may monitor the operations and/or configurations of the applications 324, the computer network interface 290, and/or of an accessed website for the web access status and/or the application threat status. The web access status and the application threat status may be indicative of website or application based threats such as, but not limited to, phishing, tracking (e.g., hypertext markup language (HTML) canvas fingerprinting, evercookies, etc.), cross-site scripting (XSS) exploits (e.g., click jacking, key logging, cookie stealing, etc.), extended idle time, text input requests, and/or a malware site link. The monitors 342 may monitor the application operations for actions that constitute possible threats to the security of the electronic device 11. For example, an application operation may include an attempt to access assets of the electronic device 11 and/or a request to access these assets. For example, a texting application may request access to the modem to send a short message service (SMS) text or a social media application may attempt to access images stored on the electronic device 11.

The monitors 342 may monitor requests for network connections and network communications channels for the network connectivity status. For example, the monitors 342 may monitor the peripheral hardware device interface 270, the transceiver 260, the computer network interface 290, the location determination module 280, and/or the processor 230. As a further example, the monitors 342 may monitor activities of the network connection service 325 of the electronic device 11. The monitors 342 may monitor for network configurations and/or activities that may pose a threat to the security of the electronic device 11. For example, an untrusted network could impersonate a trusted network and steal information from network traffic and/or harvest user passwords. In another example, the network may be behind a firewall in which case on-device assets may be secure but data in transit from the electronic device to another entity may be at risk in the case of an untrusted network (e.g., data in transit may be a target of a man-in-middle attack). In a further example, the network connection service 325 may indicate a level of trust for the network connected to the electronic device 11 via the network connection service 325. The monitors 342 may monitor the configuration of the electronic device 11 with regard to a connection to the computer network 15 and/or the communications network 16, for example, a connection of peripheral hardware device(s) 13 to the peripheral hardware device interface 270, network access settings of a modem and/or the computer network interface 290, a connection using a USB port, etc. Physically connecting peripheral hardware device(s) 13 to the electronic device 11 using the USB port may initiate a handshake protocol for the connection. This handshake protocol may be vulnerable to attacks. Such attacks may enable installation of malware (e.g., viruses, rootkits, adware, spyware, etc.) on the electronic device 11 and/or may enable copying and/or transferring of assets from the electronic device. These assets may include, for example, a user contact list, stored images, and/or other information stored on the electronic device. The existence of the connection and/or the operations and/or characteristics of the connection may indicate a possible threat to the security of the electronic device 11.

The monitors 342 may monitor the authentication status of a user and/or the device attestation status. For example, the monitors 342 may monitor the processor 230 and/or the TEE 235 for authentication and/or attestation information and operations. An unauthenticated user, a secondary user etc. may indicate a possible threat to the security of the electronic device 11. Further, a weak or non-existent PIN or password may indicate a possible threat to the security of the electronic device 11. An attestation status below a status required by a particular security policy may indicate an untrusted device and a possible security threat to user information and/or transactions.

The monitors 342 may monitor a hardware tampering status of the electronic device 11 for evidence of tampering. Tampering refers to a persistent physical change to the hardware of the electronic device 11 (e.g., a new, changed, and/or replaced battery, fingerprint input device, SIM card, and/or an opened mobile device case).

Particular operations and/or configurations of the electronic device 11 may be considered triggers 310. The monitors 342 may monitor the status of the electronic device 11 for the triggers 310. Triggers 310 may include, but are not limited to, contextual triggers, malware triggers, rooting triggers, web access triggers, connectivity triggers, authentication triggers, tampering triggers, applications triggers, and/or a combination thereof. The triggers 310 may be indicative of a threat to the security of the electronic device 11. The triggers 310 are particular operations and/or configurations of the electronic device 11 that cause the DTMS 340 to evaluate a security risk associated with the particular operations and/or configurations. The operations may include user activities such as, for example but not limited to, data entry, requests/attempts for web access, requests/attempts to download/upload data, requests/attempts to execute software and/or applications, requests/attempts to access stored information, connections of or to external hardware devices, etc. Examples of triggers 310 may include stored tracking information for a website (e.g., cookies), website permissions/privileges, streaming content for a website or accessed computer network application, installed malware, OS permissions/privileges, application permissions/privileges, and/or a connection to a particular base station, access point, website, or identified network, a jailbroken OS, a rooted OS, and/or a TEE violation. The TEE violation may indicate that applications trusted by virtue of TEE safeguards may no longer be trusted applications. Further examples of the triggers 310 may include an unauthorized communication network, an unauthorized access point or base station (e.g., the unauthorized access point or base station may indicate a man-in-the-middle attack, an international mobile subscriber identity (IMSI) catcher, a global system for mobile communications (GSM) interceptor, a subscriber tracker, etc.), a malicious proxy, an untrusted root certificate, a geofence violation, and/or a service set identifier (SSID) violation. The application triggers may be actions and/or operations of the applications 324 that may threaten the security of the electronic device 11. The triggers and possible threats to the security of the electronic device 11 as listed above are examples only and not limiting of the disclosure.

The security risks indicated by the triggers 310 may be active threats and/or persistent threats. Active threats are temporary configurations and/or operations (for example, malware execution, a request to access the sensors 250, an unauthorized geographic location, an unauthenticated user, etc.). Persistent threats are permanent changes to the configuration and/or operation of the electronic device 11. For example, a new fingerprint sensor hardware may constitute a persistent threat if the hardware is unauthorized by the OEM. As another example, a rooted OS kernel may be a permanent change (e.g., a persistent threat) to trusted OS operations.

The monitors 342 of the DTMS 340 may provide device status information (e.g., information determined by the monitors 342 based on the monitored statuses and/or monitored triggers 310) to the scoring service 345. Based on the device status information and on the one or more security policies, the scoring service 345 may determine security threat information. The security threat information may include the device status information and/or detected threat information. Detected threat information may indicate monitored statuses and/or monitored triggers 310 identified as security threats to the electronic device 11 by the scoring service 345 based on the one or more security policies. The security policy service 350 may obtain the one or more security policies and provide security policy information to the scoring service 345. The one or more security policies identify which statuses and/or triggers pose the security threat to the electronic device and indicate targeted security actions responsive to the detected threats. Examples and further details regarding the one or more security policies are provided below in the discussion of Tables 6, 7, 8, 9, 10, and 11.

As an example of the operations of the scoring service 345, a change in the location of the electronic device 11 may trigger the scoring service 345 to evaluate the security risk based on a geofence policy. Depending on the geofence policy, the change in the location may not be a security threat, may be a weak security threat warranting a user warning, or may be a strong security threat warranting blocking all access to stored content on the electronic device 11. For example, a parent may set up a geofence policy to indicate a preference that the electronic device 11 access the communications network primarily at home with a notice generated if the electronic device 11 accesses the communications network outside of the house (e.g., to avoid data charges). On the other hand, an enterprise organization may set up a geofence policy to prohibit the use of the electronic device 11 in a particular country. Thus use of the electronic device in the particular country may generate a trust score indicative of a lower level of trust than the use of the electronic device at the child's school even though each case is a violation of a geofence policy.

As another example of the operations of the scoring service 345, combinations of monitored triggers or statuses may identify the triggers or statuses as threats. For example, an extended idle time on a website tab (e.g., an idle time that exceeds a predetermined time limit) may pose a threat in the presence of a shoulder surfer (i.e., another person may view a user's screen and obtain private web information). However, the extended idle time in a private office may not pose a threat. As another example, a request from a website for text input may pose a threat if the request occurs in combination with key-logging. However, in the absence of key-logging, the request for the text input may not pose a threat. As a further example, a USB connection to peripheral hardware may pose a threat if the connection occurs in combination with unauthenticated peripheral hardware.

The scoring service 345 may determine a trust score based on the detected threat information and based on the one or more security policies. The security threat information of the scoring service 345 may include the trust score. In an example implementation, not limiting of the disclosure, the scoring service 345 may determine three categories of trust scores: a device trust score, a user trust score, and a connection trust score. In various implementations, the scoring service 345 may determine one or more of these trust scores and/or may determine other categories of trust scores.

The connection trust score may indicate a trust associated with a network (e.g. the wireless communication network 16, the computer network 15) to which the electronic device 11 is connected and/or a trust associated with the communications channel with the network. The user trust score may indicate a trust associated with the user of the electronic device 11. The user trust score may indicate a level of certainty that user's identity is known and verified and/or that the user is entitled to access various device services based on the user's identity. For example, the user trust score may indicate a low level of trust if the user does not need to use a password or PIN to access the device. In this case, the electronic device 11 may not be able to verify the user's identity. As another example, a user logged in with a low entropy PIN may be associated with a higher level of trust than the user that is able to access the device without a PIN. However, the user logged in with the low entropy PIN may be associated with a lower level of trust than a user that is logged in with a biometric authentication such as an iris scan or a fingerprint. The device trust score may indicate a trust associated with the electronic device 11 itself. In other words, the device trust score may not indicate a trust associated with the user of the electronic device 11 or with a communications channel and/or other entity connected to the electronic device 11. Violations and/or changes of the design and/or intended use of the electronic device 11 may affect the trust score in a manner indicative of a reduction in the trustworthiness of the device with regard to security. For example, a rooted mobile phone may diminish the integrity of the operating system. Detection of the rooted mobile phone may result in a change in the device trust score to indicate a reduction in the security of the electronic device 11. The relative amount of change to the device trust score may depend on the detected threat. For example, a detected virus may result in a larger change in the device trust score than detected adware as the device may be more vulnerable to data theft and be less secure in the presence of the virus than in the presence of the adware.

Table 1 below provides an example of a trust scoring system that includes the device, user, and connection trust scores. Table 1 is an example only and not limiting of the disclosure. In this example, a trust score of 100 or another particular number may indicate a trusted device with no detected threats. The detected operation/configuration indicated in Table 1 may reduce the trust score by a certain amount as indicated in the table for each occurrence of the detected operation/configuration. For example, malware may reduce the trust score by 5 points for each occurrence of detected malware. In this example, two occurrences of detected malware may result in a device trust score of 90. "N/A" as used herein indicates "not applicable." The "policy driven" trust score indicates that single trust score adjustment may not apply and a more complex adjustment and/or situationally dependent adjustment of the trust score applies according to the security policy.

| Table 1 | | | |
|---|---|---|---|
| Detected operation/configuration | Device Trust Score | User Trust Score | Connection Trust Score |
| Rooted/J ailbroken | -5 | (N/A) | (N/A) |
| Duration user logged in | (N/A) | Policy driven | (N/A) |
| | | e.g., > 5 min, - 1 | |
| | | > 1 hour, -10 | |
| Non-primary user | (N/A) | Policy driven e.g., secondary user, -1 unauthorized user, -10 | (N/A) |
| Unknown SSID | (N/A) | (N/A) | -5 |
| Malware | -5 | (N/A) | -5 |
| Unofficial application store | -2 | (N/A) | (N/A) |
| Allowed installation of third party applications | -2 | (N/A) | (N/A) |
| Low password strength | (N/A) | 0 | (N/A) |
| No user authentication | (N/A) | -5 | (N/A) |
| Geofence violation | (N/A) | (N/A) | Policy driven |
| | | | e.g., in US, -3 |
| | | | abroad, -5 |
| Electronic device in public location | (N/A) | -2 | (N/A) |

The total trust score for each category (e.g., the total device trust score, the total user trust score and/or the total connection trust score) may be an additive combination and/or a weighted combination of the various trust scores. For example, a total user trust score for the primary user being logged in for 30 minutes without authentication in an airport may be determined as:

| |
|---|
| 100(no detected threats) |
| -1(>5 min logged in time) |
| -5(no user authentication) |
| -2(public location of airport) |
| 92 (total user trust score) |

Further, a composite trust score may be an additive combination and/or a weighted combination of the categorized trust scores. For example, a composite trust score for the rooted device in a public location with an unknown SSID may be determined as:

| |
|---|
| 100(no detected threats) |
| -5 (rooted) |
| -2(public location) |
| -5(unknown SSID) |
| 88 (composite trust score) |

The scoring service 345 may compare the trust scores to one or more trust score thresholds and/or to one or more security policies. The trust score thresholds may correspond to the trust score (i.e., a device trust score threshold for the device trust score, a user trust score threshold for the user score, a connection trust score threshold for the connection trust score, a composite trust score threshold for the composite trust score, etc.). Based on this comparison, the scoring service 345 may detect the one or more threats to the security of the electronic device 11. The detection may depend on the security policy because a particular operational status and/or configurational status may be a threat according to one security policy but may not be a threat according to another security policy. For example, the monitors 342 may monitor for and detect a connection of the electronic device 11 to a public Wi-Fi network. The security policy associated with a banking application, for example, may designate the public Wi-Fi network as a security threat. Therefore, based on the security policy of the banking application, the targeted security action service 360 may detect the security threat in the presence of the public network connection. However, the security policy associated with a weather application, for example, may not designate the public Wi-Fi network at the security threat. Based on the security policy of the weather application, the targeted security action service 360 may not detect the security threat in the presence of the public network connection. As another example, a security policy of one mobile communications service provider may indicate that a change of a SIM card is allowed for roaming (i.e., SIM card change is not a security threat) but is not allowed in an attempt to change service providers (i.e., SIM card change is a security threat). On the other hand, the security policy of another mobile communications service provider may indicate that a change to the SIM card is not allowed (i.e., all detected SIM card changes are a security threat). Thus the change of the SIM card may or may not be detected as a security threat depending on the security policy of the mobile communications service provider.

The scoring service 345 may provide security threat information (e.g., status information, detected threat information, and/or trust score information) to the targeted security action service 360. The security policy service 350 may provide security policy information to the targeted security action service. Based on the security threat information and on the security policy information, the targeted security action service 360 may select one or more targeted security actions for implementation on the electronic device 11. The targeted security action service 360 may select the one or more targeted security actions from targeted security action lists in the security policies. The security policies may suggest possible targeted security actions and the targeted security action service 360 may select the targeted security actions from amongst the suggested possible actions. The targeted security action service 360 may select the targeted security actions based on priorities assigned to various actions and/or security policies and/or based on electronic device settings. In an implementation, the security policies may mandate the targeted security actions based on the security threat information and the targeted security action service may implement the mandated targeted security action. In a further implementation, the targeted security action service 360 may override one or more security polices and/or electronic device settings based on the particular security threat information.

The targeted security action service 360 may implement targeted security actions selectively based on the one or more security policies and may target particular aspects of the operations and/or configuration of the electronic device 11. As discussed further below, the DTMS 340 and/or the application 324 may implement the targeted security actions.

By implementing the targeted security actions, the targeted security action service 360 may effect changes in (i.e., alter or modify) operations of the OS/OS kernel 320, operations of the applications 324, and/or access configurations for the file system content 245, the sensors 250 (e.g., the microphone, the camera, etc.) and/or the network/hardware interfaces 399 (e.g., the peripheral hardware device interface 270, the computer network interface 290, the transceiver 260). The targeted security actions may restrict access for a user and/or an application 324 to content, code execution, networks, and/or hardware resources of the electronic device 11. For example, the targeted security actions may change permissions/privileges associated with software or may change signals transmittable to/receivable from particular hardware. Altering or modifying the operation of the OS/OS kernel 320 and/or the applications 324 may include granting and/or changing a permission status by the targeted security action service 360. For example, the OS/OS kernel 320 and/or the applications 324 may have previously granted permission or may request permission to access device assets. The targeted security action service 360 may implement targeted security actions to change the previously granted permission and/or deny the requested permission to access the device assets. The targeted security action may selectively control the access to the memory 240, the file system content 245, the sensors 250 (e.g., camera, microphone, etc.), and/or the network/hardware interfaces 399. The targeted security actions directed at the file system content 245, the sensors 250, and/or the network/hardware interfaces 399 may be defensive targeted security actions that may restrict and/or control access to these assets. For example, the targeted security action service 360 may turn off the camera and thereby block access to the camera. In this example, even if the OS or the application has camera access permission that was granted nefariously by malware, the camera may be unavailable based on the defensive targeted security actions. As another example, the targeted security action may deny access to the modem in response to a request by an application to access the modem in order to send and/or receive information (e.g., a texting application may request access to the modem in order to send and/or receive a short message service (SMS) text). In this way, the interaction between the targeted security action service 360 and the various elements of the electronic device 11 may vary based on the functionality of the various elements. This may enhance the selectivity of the targeted security actions by increasing the possible permutations and combinations of security actions available for implementation by the targeted security action service 360. Further examples of targeted security actions are discussed below in conjunction with Tables 6, 7, 8, 9, 10, and 11.

The targeted security actions may selectively modify, inhibit, or disable access to a selected portion of the file system content 245, a selected portion of the sensors 250, a selected portion of the peripheral hardware communicatively coupled to the peripheral hardware device interface 270, a selected computer network and/or website communicatively coupled to the computer network interface 290, a selected communications network coupled to the transceiver 260, and/or a combination thereof. The selected portion of the file system content 245 may be a folder, a file, and/or a memory partition storage location. In an implementation, the targeted security action service 360 may selectively grant access to the particular portion of the file system content 245. Access to the portion of the file system content 245 may include an ability to read data in a file, folder, or memory partition storage location, an ability to write data to the file, folder, or memory partition storage location, and/or an ability to transmit data in the file, folder, or memory partition storage location via a communications or computer network. The selected portion of the sensors 250 may be one or more particular sensors such as the camera, the microphone, the accelerometer, etc. The selected portion of the peripheral hardware may be a selected device such as a printer, a flash memory stick, etc. With regard to the communications interfaces (e.g., the transceiver 260, the computer network interface 290), the targeted security action may allow communications with a particular communications network, a particular computer network, and/or a particular website and deny communications with another communications network, computer network and/or website. With regard to the peripheral hardware device interface 270, the computer network interface 290, and the transceiver 260, the operational changes triggered by the targeted security actions may restrict transmitted or received signals to or from these interfaces. This restriction may affect the types of signals and/or the information included in the signals. For example, the peripheral hardware device interface 270 may include a USB port. The targeted security action may restrict signals through this port to electrical current used to charge a battery of the electronic device and disable a transfer of data (e.g., uploading or downloading files) through this port. The targeted security action may enable the transfer of data but restrict the transfer of data to particular files. Similarly, the targeted security action may restrict data transfer via the computer network interface 290 and/or the transceiver 260. For example, the targeted security action may allow uploading of open content and disallow uploading of secret content. As another example, the security action may disallow downloading of data from a particular website or via a particular communications network.

Table 2 below shows examples of operations and/or access that may be allowed based on comparing the trust scores to the one or more trust score thresholds. Table 2 is an example only and not limiting of the disclosure. In these examples, the operations and/or access is allowed if the particular trust score exceeds a threshold for that score and for the particular operation/access. The operations and/or access may be operations and/or access as implemented by and/or requested by the OS/OS kernel 320, one or more applications 324 and/or or other firmware and/or software executing on the electronic device. In this example, "DRM protected content" is digital rights management protected content and "MNO subsidy lock" is a mobile network operator subsidy lock.

| Table 2 | | | |
|---|---|---|---|
| Operation/access | Device trust score | User trust score | Connection trust score |
| Expose local keys | >threshold | >threshold | (N/A) |
| Execute trusted application (TA) | TA specific threshold for trust score | >threshold | TA specific threshold for trust score |
| DRM protected content | >threshold | >threshold | >threshold for streamed content |
| MNO subsidy lock | >threshold | --- | (N/A) |
| Access to user data/device at rest | Allowed according to user defined policy for trust score | Allowed according to parental control policy and/or anti-theft control policy for trust score | (N/A) |
| Access to user data/device in transit | Application specific for trust score (e.g., allowed for browser, disallowed for social media application) | Allowed according to parental control policy and/or anti-theft control policy for trust score | Allowed on trusted network or if virtual private network (VPN) is used |
| Access to enterprise/device at rest | >threshold | >threshold | Allowed if device is not connected to USB (except for charging) |
| Access to enterprise/device in transit | >threshold | >threshold | Allowed on trusted network or if VPN is used and if device is not connected to USB |
| Access to network | --- | --- | >threshold |

Exceeding the threshold indicates a level of trust in the device (e.g., a sufficiently healthy and secure device) such that the operations and/or access may not threaten device and/or data security more than an acceptable amount as determined by the one or more security policies and/or the device settings. However, if the trust score does not exceed the threshold, then the targeted security actions may be implemented to protect device security. For example, if the connection trust score is below the connection trust score threshold, the targeted security action service may force an enablement of a VPN in order to protect device security in the presence of the lower trust score.

Based on the comparison of the trust score to the trust score thresholds and/or the security policies, the security and/or trust in the electronic device 11 may correspond to a health state of the electronic device 11, for example perfect, good, or bad device health. Perfect device health may correspond to a trust score with no changes due to detected threats. Thus, in reference to the scoring example of Table 1, the perfect device health may correspond to a trust score of 100. One or more security policies may designate a first trust score range corresponding to good health and a second trust score range corresponding to bad health. For example, a trust score above a particular threshold may correspond to good health and a trust score below the particular threshold may correspond to bad health.

In various implementations, the DTMS 340 may provide at least a portion of the security threat information to the user of the electronic device 11, to the server 18, to the one or more other electronic devices 12, or to a combination thereof. In an implementation, the DTMS 340 may request user input regarding a responsive action. The user input may specify the responsive action and/or may provide consent for the targeted security action service 360 to respond according to the security policy. The user specified responsive action may override or supplement the policy control service response.

The DTMS 340 may respond to threats even if the electronic device is in the possession of an authorized user. For example, the threats may occur outside of a lost and/or stolen state (i.e., the device is not considered to be lost and/or stolen). Even in the possession of an authorized user, software, firmware, and/or hardware of the electronic device 11 may exhibit and/or engage in behavior that constitutes the threat to the security of the device. For example, the authenticated user of the electronic device 11 may download a flashlight application and consent to a user agreement for the flashlight application. The user may be unaware that the user agreement includes consent for the flashlight application to upload pictures and contact information to the server 18. The flashlight application may enable uploading of this content regardless of user consent or provisions of the user agreement. Thus, the user may be unaware that flashlight application is able, either by design or malware, to upload the pictures and contact information to the server 18. The scoring service 345 may detect the uploading as a threat based on a security policy. Subsequently, the targeted security action service 360 may deny access of the flashlight application to the file system content 245 and/or the peripheral hardware device interface 270. In this way, the DTMS 340 may prevent the flashlight application from engaging in the undesired and threatening behavior.

The DTMS 340 may include a status/trust score application program interface (API) 370. The DTMS 340 and the applications 324 may exchange information via the status/trust score API 370. The DTMS 340 may receive a query from the applications 324 (i.e., from one or more of the applications 324) for a status of the electronic device 11. In an implementation, the DTMS 340 may receive a query from a service supported by the OS/OS kernel 320 such as, for example but not limited to, the network connection service 325. In response to the query, the DTMS 340 may provide device status information and/or security threat information to the applications 324 and/or a service, for example, the network connection service 325. The device status information may include information regarding monitored operations and/or configurations of the electronic device 11. Table 3 provides examples of possible queries and responses associated with the Status/Trust Score API 370 regarding the monitored status of the electronic device 11. Table 3 is an example only and not limiting of the disclosure.

| Table 3 | |
|---|---|
| Monitored operation and/or configuration | Possible Status/Trust Score API responses |
| Is device connected via VPN? | <yes\|no> |
| Is device connected to trusted WPAN (e.g., Bluetooth® network)? | <yes\|no\|unknown> |
| Is device connected to trusted WLAN (e.g., Wi-Fi network)? | <yes\|no\|unknown> |
| Is device connected to trusted WWAN (e.g., 3G/4G network)? | <yes\|no\|unknown> |
| Is device connected via USB to a trusted external device? | <yes\|no\|charging only> |
| Is device connected to a docking station? | <yes\|no> |
| Has battery ever been replaced? | <yes\|no> |
| Has device ever been serviced at a support center? | <yes\|no\|unknown> |
| Is device refurbished? | <yes\|no\|unknown> |
| What is memory card status? | <original\|new\|none\|unknown> |

In addition to the device status information shown above in Table 3, the DTMS 340 may provide security threat information to the applications 324 and/or the service (e.g., the network connection service 325) via the status/trust score API 370. The security threat information may include detected threat information, trust score information, targeted security action information and/or other security policy information. The one or more applications 324 and/or the service (e.g., the network connection service 325) may implement one or more targeted security actions based on the information received from the DTMS 340. In an implementation, the DTMS 340 may select the targeted security actions for the one or more applications 324 and/or the service and instruct the one or more applications 324 and/or the service to implement the targeted security actions. In a further implementation, the one or more applications 324 and/or the service may select and implement the targeted security actions.

Table 4 provides examples of applications, associated queries to the status/trust score API 370, and targeted security actions implemented by the applications 324 based on the query response. Table 4 is an example only and not limiting of the disclosure.

| Table 4 | | |
|---|---|---|
| Application | Query | Targeted Application Security Action |
| Wireless service carrier and/or OEM | Is device rooted? | If yes, void warranty |
| Wireless service carrier and/or OEM | Is hardware modified by unofficial support center? | If yes, void warranty |
| Payment application | Is device rooted? | If yes, change credit limit and/or if yes, change transaction fees |
| Payment application | Is active malware detected? | If yes, change credit limit and/or if yes, change transaction fees |
| Financial service application | What is location of device? | If location violates geofence, deny or limit enterprise service and/or require multi-factor authentication |
| Financial service application | What is authentication status of user? | If authentication status is below status required by security policy, deny or limit service and/or require multi-factor authentication |
| Financial service application | What is device attestation status? | If attestation status is below status required by security policy, deny or limit service and/or require multi-factor authentication |
| Enterprise service application | What is location of device? | If location violates geofence, deny or limit enterprise services |
| Enterprise service application | What is Wi-Fi SSID? | If Wi-Fi SSID indicates untrusted Wi-Fi network, deny or limit enterprise services |
| Enterprise service application | What is composite trust score? | Limit access to secret and/or sensitive content based on composite trust score |
| Browser | What is fraction of HTTPS and HTTP content for downloaded web page? | If yes, notify user of the risk to privacy and increase volume of notification sound if high security preferences are selected by user in browser settings |
| Third party application | Is application and/or browser malware detected? | If yes, limit camera and/or microphone access |

In an implementation, the one or more applications 324 may monitor for and detect security threats. The one or more applications 324 may provide the security threat information to the DTMS 340 (e.g., the DTMS 340 may receive the security threat information from the applications 324 via the status/trust score API 370). The scoring service 345 may utilize the security threat information from the applications 324 to detect security threats and/or calculate trust scores. For example, a platform application, such as, for example, the browser 326, may provide a runtime environment and/or control access to assets of the electronic device 11. Given these capabilities, the platform application may include detection mechanisms configured to monitor for and detect security threats. The platform application may determine security threat information that may be unavailable and/or undetected based on monitoring of the OS/OS kernel 320 by the monitors 342. For example, these detection mechanisms may detect malicious exploits (e.g., phishing, malware, viruses, etc.) executing in the platform of the platform application rather than in the OS platform. The browser 326 may provide information to the DTMS 340, via the status/trust score API 370, regarding detected threats to the electronic device 11. In an implementation, an application such as, for example, the media player 328, with access to the computer network 15, may detect security threats to the electronic device 11 and provide this security threat information to the DTMS 340. The exposure of the media player 328 to the computer network 15 may provide the media player 328 with threat information that may be unavailable and/or undetected based on monitoring of the OS/OS kernel 320 by the monitors 342.

The browser 326 and the media player 328 are examples, not limiting of the disclosure, of applications 324 that access computer network content (e.g., web content, web pages, Internet sites, etc.). Interaction with computer network content may generate security threats to the electronic device 11. For example, downloaded information may include malware or viruses, communication links with computer network sites and associated services may be unencrypted and/or inadequately encrypted, communication links may be vulnerable to various hacking attacks, etc. Thus cooperation between the DTMS 340 and the applications 324 that interact directly with the computer network content may enhance the device based security provided by the DTMS 340.

Table 5 below shows examples of statuses and/or threats that the browser 326 may monitor for and/or detect. Table 5 is an example only and not limiting of the disclosure. The browser action may be the targeted security action provided to the browser 326 by the DTMS 340. Additionally or alternatively, the action may be self-determined by the browser 326 based on its associated security policy. In other words, the browser 326 may determine and implement the targeted security action without instruction from the DTMS 340. Although Table 5 is directed at the example of the browser 326, other of the applications 324 may be configured to perform similar functions based on their own detection capabilities and respective security policies.

| Table 5 | |
|---|---|
| Monitored status/Detected Threats | Browser action |
| Third party cookie tracking | Disable third party cookies |
| Evercookies | Deny access to website or request additional authorization from user |
| Insecure website | Deny access to website |
| Malware detected in JavaScript® | Disable JavaScript® for the website and/or change site authorization to read-only |
| Adult content | Block content and/or the website according to parental control policy |
| Browsing | Notify user of the risk to privacy and increase volume of notification sound if high security preferences are selected by user in browser settings |
| Access to unencrypted site | Warn user and/or automatically request use of equivalent encrypted site |
| Privacy violation | Limit or deny camera and/or microphone access |

In an implementation, an application running on an external server may interact with the DTMS 340 via the status/trust score API 370. For example, the external server may query the status/trust score API 370 for one or more trust scores. Based on the one or more trust scores, the application running on the external server may implement various security services (e.g., a lost device service, a device location service, a restriction on network connectivity and/or communications, etc.).

The security policy service 350 may obtain the one or more security policies and may provide security policy information to the scoring service 345 and/or the targeted security action service 360. In an embodiment, the security policy service 350 may generate the security policy at the electronic device 11. The electronic device 11 may generate and configure the client-based security policy and related security settings independently from (i.e., not based on) information received from an external server (e.g., the server 18). The security policy service 350 may generate the security policy without user input or based fully or in-part on user input. For example, the security policy service 350 may automatically generate a default security policy. In an implementation, the default security policy may be unchangeable by the device user. Alternatively, the security policy may include user editable options. The security policy may be based on device settings. In an embodiment, the security policy service 350 may receive an uneditable, partially editable, or fully editable security policy from the external server (e.g., the server 18). For example, an enterprise server may generate the security policy and push the security policy to the electronic device 11 from the cloud storage system 19. In an implementation, the pushed security policy may not overwrite a user policy for non-enterprise content (e.g., personal user content) and/or may not disallow the user from determining the user policy for the non-enterprise content. For example, the electronic device 11 may be use in a bring-your-own-device (BYOD) enterprise environment. In a further embodiment, the security policy service 350 may combine a received security policy with a locally generated security policy. The security policy service 350 may enable security policy priority options. The locally generated security policy may override one or more provisions of the received security policy or vice versa. The security policy service 350 may further enable the user and/or an automated function of the electronic device 11 to customize the received security policy and/or features thereof based on device location information, device context information, application information and/or other device information or settings.

The security policy may correspond to a respective application, network, user, service, website, etc. Thus the security policy service 350 may obtain one or more security policies with each security policy corresponding to one or more respective applications, networks, users, services, websites, a combination thereof, etc. For example, the security policy for a social media application may differ from the security policy for a banking application. As another example, the security policy for a secured communications network may differ from the security policy for an unsecured communications network. The operations and/or configurations of the electronic device that constitute threats and/or the targeted security actions in response to the detected threats may be the same or different for the various security policies.

Tables 6, 7, 8, 9, 10, and 11 below show examples of various security policies according to the disclosure. Tables 6, 7, 8, 9, 10, and 11 are examples only and not limiting of the disclosure. The security policies may include one or more of a universal content access policy, an application access policy, a network access policy, a parental control policy, a multi-user policy, a service policy and/or a web policy. These types of policies are examples of types of security policies and are not limiting of the invention. Other types of security policies are within the scope of the disclosure.

Table 6 below shows an example of a content classification policy. The file system content security classifications and respective file system content shown in Table 6 are examples only and not limiting of the invention. Other classifications and file system content, and other correspondences between classifications and file system content 245 are within the scope of the disclosure. Each portion of the file system content 245, such as a folder, a file, or a memory partition storage area, may correspond to a respective level of security. Each level of security may be more or less secure relative to each other level of security. As shown in the example of Table 6, the security policy may designate the levels of security as secret, sensitive, and open and may classify portions of the file system content 245 and/or types of information included in the file system content 245 (e.g., image information, mail and/or text message information, location information, user notes, user contacts, user calendar, music, recipes, electronic books, search strings, passwords, etc.) as secret content, sensitive content, and open content. The requisite electronic device security state for access to the particular portion of the file system content 245 may depend on the file system content classification. The security policy service 350 may classify portions of the file system content 245 based on a desired level of security for the portion of the file system content 245. The file system content 245 may include enterprise content and user content. The user content may include content associated with one or more users. For example, if the electronic device 11 is used by a family, the file system content 245 may include content associated with a primary parent user, content associated with a secondary parent user, content associated with children, etc. The security policies associated with content may designate different security levels for various portions of the user content and may specify different security actions in response to threats to the various portions of the user content.

| Table 6 | |
|---|---|
| FILE SYSTEM CONTENT CLASSIFICATION | FILE SYSTEM CONTENT |
| secret content | e.g., image information, mail and/or text message information, passwords |
| sensitive content | e.g., user contacts, user calendar, location information |
| open content | e.g., music, recipes, electronic books, search strings and/or any file system content not classified as secret or sensitive |

Table 7 below shows an example of a universal content access security policy. The universal content access security policy determines access to the portions of the file system content 245 based on the content classification. Access to content requiring higher security and/or privacy may require the device health state indicative of a lower threat to the health of the electronic device. For example, access to secret content may require perfect device health wherein access to sensitive content may require good device health. In an implementation access to particular content may not require a particular level of device health. For example, access to open content may occur with perfect, good, or bad device health. The universal content access security policy may apply to an entity (e.g., an application, a website, a user, a network, etc.) requesting or attempting to access portions of the file system content. The content access under this policy is based on the content classification.

| Table 7 | | | |
|---|---|---|---|
| FILE SYSTEM CONTENT CLASSIFICATION | SECURITY ACTION | | |
| | PERFECT DEVICE HEALTH | GOOD DEVICE HEALTH | BAD DEVICE HEALTH |
| Secret content | Allowed access | Disallowed access | Disallowed access |
| Sensitive content | Allowed access | Access with forced authentication | Disallowed access |
| Open Content | Access per default settings | Access per default settings | Access per default settings |

In the example of Table 7, "disallowed access" indicates that in the presence of detected threats, secret content is inaccessible. "Access with forced authentication" indicates that in the presence of detected threats, the targeted security action service 360 may cause the processor 230 to request user authentication prior to enabling access to the sensitive content. The default settings may be content access settings of the OS/OS kernel 320, the applications 324, and/or the trusted applications 330. In the case of "access per default settings," access to the open content may remain available in the presence of detected threats. In an embodiment, the universal content access security policy may apply to website and/or application content including content streaming on the electronic device 11.

Table 8 below shows an example of an application access security policy. Each application access security policy is associated with one or more applications (e.g., applications 324 or trusted applications 330).

| Table 8 | | | |
|---|---|---|---|
| TYPE OF ACCESS | SECURITY ACTION | | |
| | PERFECT DEVICE HEALTH | GOOD DEVICE HEALTH | BAD DEVICE HEALTH |
| Access to file system content by local or remote application in presence of USB connection | - Require authentication for access to all content (e.g., secret, sensitive, and open content) | -Allow USB charging | |
| | | -Deny access to and sensitive secret content | -Allow USB charging |
| | | -Require authentication for access to open content | -Deny access to all content (e.g., secret, sensitive, and open content) |
| Access to file system content by local application | -Allow access to all content per default application settings | -Deny access to secret content | -Deny access to all content (e.g., secret, sensitive, and open content) |
| | | -Require authentication for access to sensitive or open content | |
| Access to hardware (e.g., sensors, transceiver, and peripheral hardware device interface) by local application | -Allow access to all hardware features | -Selectively restrict access to hardware features | -Deny all access to hardware features |
| Access to file system content for high value security applications | -Allow access to all file system content for authenticated primary user | -Deny access to secret content | -Deny access to all file system content |
| | | -Allow access to sensitive and open content for any authenticated user | |

In this example, "default application settings" refer to settings on the electronic device governing access to the electronic device assets (e.g., access to camera, microphone, location information, contact list, etc.) for various applications. With perfect device health, the default application settings govern access privileges of the applications. However, in the presence of detected threats (e.g., good device health or bad device health), the targeted security action service 360 overrides the default access settings and selectively restricts access of the applications to the electronic device assets. "USB charging" allows the electronic device 11 to charge a battery via the USB connection but disallows transmission and reception of information via the USB connection. A "local application" is an application residing on the electronic device 11. A "remote application" is an application residing on an external entity, for example, the server 18 and/or the peripheral hardware device(s) 13. "Selectively restrict access" to hardware selectively allows access to a first portion of the electronic device hardware and restricts access to a second portion of the electronic device hardware. For example, the targeted security action of "selectively restrict access" may disable access to the transceiver and the USB connection but enable access to the camera and the microphone for a target application. In this way, the targeted security action may prevent the target application from uploading information from the electronic device 11 but allow the target application to perform functions requiring the camera or the microphone. Examples of "high value security applications" include secure token generator applications and other applications involved in authentication and/or cryptography operations of the electronic device 11. Authentication procedures for the electronic device 11 may identify one or more authenticated users of the electronic device 11. Further, the authentication procedures may designate an authenticated user as a primary user of the electronic device 11. The primary user designation may associate the primary user with expanded device access privileges relative to other (i.e., non-primary) authenticated users. These privileges may allow the primary user to access one or more device features (e.g., applications, folders, files, memory locations, device settings, hardware, etc.) unavailable to non-primary users.

Table 9 below shows examples of a network access security policy, a parental control security policy, and a multi-user security policy. The network access security policy may correspond to one or more respective networks. The network access security policy may provide security actions based on a detected configuration and/or operation of the communication channel associated with the electronic device 11 and the particular network. Further, the electronic device 11 may include one or more network access security policies.

| Table 9 | | | |
|---|---|---|---|
| TYPE OF USER ACCESS SECURITY POLICY | SECURITY ACTION | | |
| | PERFECT DEVICE HEALTH | GOOD DEVICE HEALTH | BAD DEVICE HEALTH |
| Network access security policy | -Allow access of application to file system content | -Selectively restrict access of application to file system content | -Deny network access |
| | -Allow network access by application for attested device | -Allow network access by application for attested device | |
| Parental control security policy | **-**Allow access to all file system content for authenticated primary user | -Deny access to secret content | -Deny access to secret and sensitive content |
| | -Selectively allow access to all content for | -Allow access to sensitive and open content for authenticated primary user | -Allow access to open content for authenticated primary user |
| | authenticated secondary user(s) according to parental control settings | -Selectively allow access to sensitive and open content for authenticated secondary user(s) according to parental control settings | -Selectively allow access to open content for authenticated secondary user(s) according to parental control settings |
| Multi-user security policy (e.g., an educational device) | -Allow access to all file system content for authenticated primary user | -Deny access to secret content | -Deny access to secret and sensitive content |
| | -Selectively allow access to all content for authenticated secondary user(s) according to multi-user settings | -Allow access to sensitive and open content for authenticated primary user | -Allow access to open content for authenticated primary user |
| | | -Selectively allow access to sensitive and open content for authenticated secondary user(s) according to multi-user settings | -Selectively allow access to open content for authenticated secondary user(s) according to multi-user settings |

"Attested device" indicates that the electronic device 11 has performed a device attestation procedure. In various implementations, the electronic device 11 may perform the attestation procedure unassisted or assisted by an external entity such as a third party attestation server. Device attestation provides assurance that a physical device is a trusted and secure device. In the context of a communication network, device attestation may provide secure communication between network devices. The device attestation may ensure that the communicating network devices are intended and/or verified devices. As an example not limiting of the disclosure, device attestation may determine that a private key associated with the device is an attested key. As discussed above, authentication procedures for the electronic device 11 may designate an authenticated user as a primary user of the electronic device 11. The primary user may designate one or more users as secondary users. The secondary users may have reduced access privileges (e.g., as compared to the primary user) and/or conditional access privileges. The security policy and/or the primary user may determine the access privileges of the secondary user. In the context of the parental control security policy, the primary user may be a parent and the secondary user may be a child.

Table 10 below shows an example of a service security policy.

| Table 10 | | |
|---|---|---|
| TYPE OF SERVICE SECURITY POLICY | DETECTED THREAT | SECURITY ACTION |
| Connection to enterprise network | -Any detected threat | -Require device to attest to device health state |
| | | -Allow connection for devices trusted by network based at least in part on attested device health state |
| Warranty service from wireless network carrier and/or OEM | -Rooted OS | -Deny warranty service |

The service security policy refers to a policy governing security for a particular service provided by a network, network carrier, or OEM. In the presence of the detected threat(s), the provided service (e.g., network connection, warranty service) may be provided with restrictions or the provided service may be denied.

Table 11 below shows an example of a website security policy. The website security policy refers to a policy governing security for one or more websites. The website(s) affected by one security policy may be a category of websites or another designated group of websites. The threat may be imposed by the website on the electronic device 11. The processor executable instructions regarding operations of the threat (e.g., tracking instructions, XSS Exploit instructions, text input instructions) may reside on or off of the electronic device.

| Table 11 | |
|---|---|
| DETECTED WEBSITE THREAT | SECURITY ACTION |
| Any detected threat | -Deny access to device location and/or deny access to sensors |
| Hidden tracking | -Notify user |
| | -Optionally deny all content access |
| XSS Exploit | -Notify user |
| | -Optionally deny all content access |
| Untrusted root certificate | -Disable proxy |
| Extended idle time | -Minimize browsing tabs |
| Text input request | -Force virtual private network (VPN) or hypertext transfer protocol secure (HTTPS) usage |

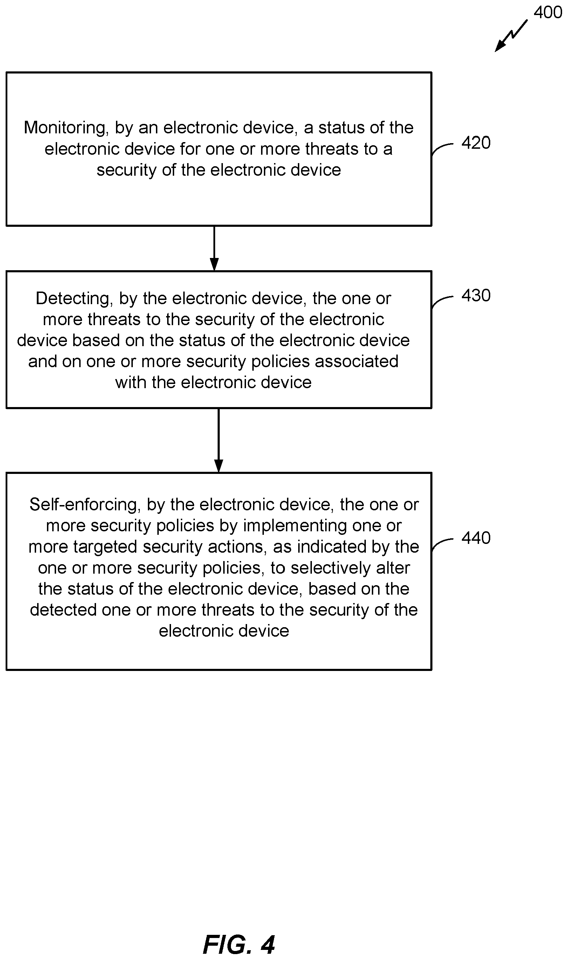

Referring to FIG. 4, a method 400 of providing security for an electronic device is shown. The method 400 is, however, an example only and not limiting. The method 400 can be altered, e.g., by having stages added, removed, rearranged, combined, and/or performed concurrently. Providing security for the electronic device may include protecting the privacy and/or security of user information and/or providing security for assets of the electronic device (e.g., assets may include stored information, software, firmware, and/or hardware of and/or associated with the electronic device 11).

At stage 420, the method includes monitoring, by the electronic device, a status of the electronic device for one or more threats to a security of the electronic device. For example, the processor 230 may execute the DTMS 340 to monitor the status of the electronic device 11 for threats to the security of the electronic device 11. Monitoring the status of the electronic device may include one or more of monitoring, by the monitors 342 of the DTMS 340, a device attestation status, a user authentication status, a hardware tampering status, a web access status, a malware status, a network connectivity status, and/or a combination thereof. The monitoring may include monitoring particular operations and/or configurations of the electronic device 11 that may be considered the triggers 310. The triggers 310 may include, but are not limited to, contextual triggers, malware triggers, rooting triggers, web access triggers, connectivity triggers, authentication triggers, tampering triggers, application triggers, and/or a combination thereof. The monitoring may include monitoring the operation of software, firmware, and/or hardware for behavior of the software, firmware, and/or hardware that violates at least a portion of a security policy. For example, the monitors 342 may monitor processor activities, application activities, website activities, hardware activities, hardware configurations, software configurations, firmware configurations, network configurations, website configurations, etc. The monitoring may include executing the set of one or more detection algorithms. In an implementation, the monitoring may include monitoring a connection status of the peripheral hardware device connector 275, monitoring a transmission/reception status of the computer network interface 290 and/or the transceiver 260, monitoring an access status for the file system content 245 and/or the sensors 250, monitoring location information for the electronic device, monitoring user authentication information, and/or a combination thereof.

At stage 430, the method includes detecting, by the electronic device, the one or more threats to the security of the electronic device based on the status of the electronic device and on one or more security policies associated with the electronic device. For example, the processor 230 may execute the DTMS 340 to detect threats to the security of the electronic device 11. Detecting the one or more threats to the security of the electronic device 11 may include detecting the threats based on flags or other indications of a detected threat as generated by the detection algorithms and/or based on one or more of the monitored connection status, transmission/reception status, access status, the location information, and/or the user information. The detecting may include autonomously detecting the threats to the security of the electronic device 11 without receiving an indication of the one or more threats from an external entity. For example, the DTMS 340 may detect the threats without threat information being pushed from the cloud service of an MDM server or other threat management service server to the electronic device 11. The one or more threats to the security of the electronic device may include malware, an ARM® TrustZone® violation, a connection to a peripheral hardware device, a network connection, or an indication of an insecure website policy.

The detecting may include calculating one or more trust scores based on the status of the electronic device 11 and on the one or more security policies associated with the electronic device 11. For example, the scoring service 345 of the DTMS 340 may calculate the one or more trust scores. The detecting may further include detecting the one or more threats to the security of the electronic device 11 based on the one or more trust scores and the one or more security policies. The trust scores and the one or more security policies may indicate that a monitored operation and/or configuration of the electronic device 11 is a threat to the security of the electronic device. Based on this indication, scoring service may detect the threat. Detecting the one or more threats may include designating a monitored status of the electronic device as a threat by the scoring service 345. Calculating the one or more trust scores may include receiving security threat information from the one or more applications 324 and calculating the one or more trust scores based on this received security threat information. For example, applications such as the browser 326 and/or the media player 328 may determine security threat information based on their access to web content and provide the security threat information to the DTMS 340 via the status/trust score API 370.

At stage 440, the method includes self-enforcing, by the electronic device, the one or more security policies by implementing one or more targeted security actions, as indicated by the one or more security policies, to selectively alter the status of the electronic device, based on the detected one or more threats to the security of the electronic device. For example, the processor 230 may execute the targeted security action service 360 of the DTMS 340 to selectively alter the status of the electronic device. The electronic device may self-enforce the security policies without receiving security policy and/or security action information from an external entity. For example, the DTMS 340 may self-enforce the security policies without security policy and/or security action information being pushed from the cloud service of an MDM server or other threat management service server to the electronic device 11. The self-enforcing of the one or more security policies may include selecting, by the targeted security action service 360 of the DTMS 340, one or more targeted security actions for selectively altering the status of the electronic device 11 based on the detected one or more threats to the security of the electronic device 11. Further, the self-enforcing of the one or more security policies may include implementing the one or more selected targeted security actions. Implementing the one or more targeted security actions may include modifying operations of the OS/OS kernel 320 and/or the operations of the applications 324 and/or the operations of a service such as the network connection service 325. Additionally or alternatively, implementing the one or more targeted security actions may include modifying access for the OS/OS kernel and/or the applications 324 to stored filed system content 245, sensors 250 (e.g., microphone, camera, etc.), a network (e.g., communications network 16 and/or computer network 15) and/or a remote host (e.g., a server on the computer network 15, the server 18, etc.), the input/output device(s) 20 and/or to the peripheral hardware device(s) 13.

In an embodiment, the DTMS 340 may implement the targeted security actions. For example, the DTMS 340 may modify and/or restrict the operations of the OS/OS kernel 320 and/or the applications 324.

In an embodiment, the applications 324 may implement the targeted security actions. The applications 324 may query the status/trust score API 370 of the DTMS 340 for a status of the electronic device 11. In an implementation, the network connection service 325 may implement the targeted security actions and may query the status/trust score API 370 of the DTMS 340 for a status of the electronic device 11. The DTMS 340 may provide device status information and/or other security threat information to the applications 324 in response to the query. The applications 324 may implement the targeted security actions in response to instructions from the DTMS 340. Alternatively or additionally, the applications 324 may select and/or implement the targeted security actions without instruction from the DTMS 340. In other words, the applications 324 may self-enforce the one or more security policies instead of or in addition to the DTMS 340 self-enforcing the one or more security policies. In an implementation, the applications 324 may determine the device status information and/or other security threat information and self-enforce the security policies based on this self-determined information. The applications 324 may determine device status information and/or security threat information based on web content access of the applications 324 rather than based on operations of the OS/OS kernel 320. For example, the browser 326 and/or the media player 328 may detect threats and may select and/or implement the targeted security actions.

The targeted security action service 360 may implement the targeted security actions on the electronic device 11 without involvement of the server 18. For example, in contrast to the client-server security management system (e.g., the MDM system), the electronic device 11 may implement the targeted security actions without transmitting and/or receiving security action enforcement information, instructions, indications, and/or confirmations to and/or from the server 18.

Implementing the one or more security actions may include selectively allowing access to a portion of the file system content 245 stored in the memory 240 of the electronic device 11. The portion of the file system content 245 may be a file, a folder, and/or a memory partition storage location. Allowing access may include reading data from the file system content 245, writing data to the file system content 245, transmitting data from the file system content 245 via a network (e.g., the computer network 15, the wireless communication network 16), and/or transmitting data from the file system content 245 to the peripheral hardware device(s) 13.

In an embodiment, the method 400 may include obtaining the security policy at the electronic device. Obtaining the security policy may include generating the security policy at the electronic device, receiving the security policy from an external entity (e.g., the server 18), or a combination thereof. For example, obtaining the security policy may include combining a security policy generated at the device with a security policy received from the server 18. Obtaining the security policy may further include obtaining a plurality of security policies wherein each security policy corresponds to one or more respective entities, the respective entities comprising applications, networks, users, services, websites, or a combination thereof.

Other embodiments are within the scope of the invention. For example, due to the nature of software, functions described above can be implemented using software, hardware, firmware, hardwiring, or combinations of any of these. Features implementing functions may also be physically located at various locations, including being distributed such that portions of functions are implemented at different physical locations.

As used herein, including in the claims, "or" as used in a list of items prefaced by "at least one of' indicates a disjunctive list such that, for example, a list of "at least one of A, B, or C" means A or B or C or AB or AC or BC or ABC (i.e., A and B and C), or combinations with more than one feature (e.g., AA, AAB, ABBC, etc.). As used herein, including in the claims, unless otherwise stated, a statement that a function or operation is "based on" an item or condition means that the function or operation is based on the stated item or condition and may be based on one or more items and/or conditions in addition to the stated item or condition.

Substantial variations may be made in accordance with specific requirements. For example, customized hardware might also be used, and/or particular elements might be implemented in hardware, software (including portable software, such as applets, etc.), or both. Further, connection to other computing devices such as network input/output devices may be employed.

The terms "machine-readable medium," "computer-readable medium," and "processor-readable medium" as used herein, refer to any medium that participates in providing data that causes a machine to operate in a specific fashion. Using a computer system, various processor-readable media (e.g., a computer program product) might be involved in providing instructions/code to processor(s) for execution and/or might be used to store and/or carry such instructions/code (e.g., as signals).

In many implementations, a processor-readable medium is a physical and/or tangible storage medium. Such a medium may take many forms, including but not limited to, non-volatile media and volatile media. Non-volatile media include, for example, optical and/or magnetic disks. Volatile media include, without limitation, dynamic memory.

Common forms of physical and/or tangible processor-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, a carrier wave as described hereinafter, or any other medium from which a computer can read instructions and/or code.

Various forms of processor-readable media may be involved in carrying one or more sequences of one or more instructions to one or more processors for execution. Merely by way of example, the instructions may initially be carried on a flash device, a device including persistent memory, and/or a magnetic disk and/or optical disc of a remote computer. A remote computer might load the instructions into its dynamic memory and send the instructions as signals over a transmission medium to be received and/or executed by a computer system.

Information and signals may be represented using any of a variety of different technologies and techniques. For example, data, instructions, commands, information, signals, and symbols that may be referenced throughout the above description may be represented by voltages, currents, electromagnetic waves, magnetic fields or particles, optical fields or particles, or any combination thereof.

The methods, systems, and devices discussed above are examples. Various alternative configurations may omit, substitute, or add various procedures or components as appropriate. Configurations may be described as a process which is depicted as a flow diagram or block diagram. Although each may describe the operations as a sequential process, many of the operations can be performed in parallel or concurrently. In addition, the order of the operations may be rearranged. A process may have additional stages not included in the figure.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the scope of the disclosure.

Also, configurations may be described as a process which is depicted as a flow diagram or block diagram. Although each may describe the operations as a sequential process, many of the operations can be performed in parallel or concurrently. In addition, the order of the operations may be rearranged. A process may have additional stages or functions not included in the figure. Furthermore, examples of the methods may be implemented by hardware, software, firmware, middleware, microcode, hardware description languages, or any combination thereof. When implemented in software, firmware, middleware, or microcode, the program code or code segments to perform the tasks may be stored in a non-transitory processor-readable medium such as a storage medium. Processors may perform the described tasks.

Components, functional or otherwise, shown in the figures and/or discussed herein as being connected or communicating with each other are communicatively coupled. That is, they may be directly or indirectly connected to enable communication between them.

Having described several example configurations, various modifications, alternative constructions, and equivalents may be used without departing from the disclosure. For example, the above elements may be components of a larger system, wherein other rules may take precedence over or otherwise modify the application of the invention. Also, a number of operations may be undertaken before, during, or after the above elements are considered. Also, technology evolves and, thus, many of the elements are examples and do not bound the scope of the disclosure or claims. Accordingly, the above description does not bound the scope of the claims. Further, more than one invention may be disclosed.

## Claims

1. A method of providing security for an electronic device comprising:
monitoring, by the electronic device, a status of the electronic device for one or more threats to a security of the electronic device wherein monitoring the status of the electronic device comprises monitoring one or more of a device attestation status or a hardware tampering status;
detecting, by the electronic device, the one or more threats to the security of the electronic device based on the status of the electronic device and on one or more security policies associated with the electronic device, wherein detecting the one or more threats comprises calculating a user trust score indicative of a level of certainty that user's identity is known and verified; and
self-enforcing, by the electronic device, the one or more security policies by implementing one or more targeted security actions, as indicated by the one or more security policies, to selectively alter the status of the electronic device based on the detected one or more threats to the security of the electronic device;
and wherein the detecting step comprises:
calculating, by a device trust management service (DTMS) local to the electronic device, a plurality of trust scores based on the status of the electronic device and on the one or more security policies associated with the electronic device wherein the plurality of trust scores comprise a device trust score and the user trust score;
detecting, by the DTMS, the one or more threats to the security of the electronic device based on the plurality of trust scores and the one or more security policies; and
selecting, by the DTMS, the one or more targeted security actions based on the detected one or more threats to the security of the electronic device.

2. The method of claim 1 further comprising:
receiving, by the DTMS, security threat information from one or more applications configured to execute on the electronic device; and
calculating, by the DTMS, the plurality of trust scores based on the security threat information from the one or more applications.

3. The method of claim 1 further comprising implementing the one or more targeted security actions by a device trust management service local to the electronic device, wherein the one or more targeted security actions modify operations of an operating system, one or more applications, or a combination thereof.

4. The method of claim 1 further comprising implementing the one or more targeted security actions by a device trust management service local to the electronic device, wherein the one or more targeted security actions modify access, for at least one of an operating system or one or more applications, to one or more of stored content, sensors, a communication network, a remote host, an input/output device, or a combination thereof.

5. The method of claim 1 further comprising:
receiving a query from at least one of an application or a service configured to execute on the electronic device, at a device trust management service (DTMS) local to the electronic device, for security threat information for the electronic device;
providing, by the DTMS, the security threat information to the at least one of the application or the service; and
implementing the one or more targeted security actions by the at least one of the application or the service, wherein the targeted security actions modify operations of the at least one of the application or the service.

6. The method of claim 5 further comprising implementing the one or more targeted security actions by at least one of a browser application, a media player application, or a network connection service.

7. The method of claim 1 wherein monitoring the status of the electronic device comprises monitoring one or more of a location status, a user authentication status, a web access status, a malware status, a network connectivity status, an application threat status, or a combination thereof.

8. An electronic device comprising:
a memory; and
a processor coupled to the memory, the processor configured to:
monitor a status of the electronic device for one or more threats to a security of the electronic device wherein the processor is configured to monitor one or more of a device attestation status or a hardware tampering status;
detect the one or more threats to the security of the electronic device based on the status of the electronic device and on one or more security policies associated with the electronic device, wherein the processor is further configured to calculate a user trust score indicative of a level of certainty that user's identity is known and verified; and
self-enforce the one or more security policies by being further configured to implement one or more targeted security actions, as indicated by the one or more security policies, to selectively alter the status of the electronic device, based on the detected one or more threats to the security of the electronic device wherein the processor comprises a device trust management service (DTMS) for detecting the one of more threats to the security of the electronic device, the DTMS configured to:
calculate a plurality of trust scores based on the status of the electronic device and on the one or more security policies associated with the electronic device, wherein the plurality of trust scores comprise a device trust score and the user trust score;
detect the one or more threats to the security of the electronic device based on the one or more trust scores and the one or more security policies; and
select the one or more targeted security actions based on the detected one or more threats to the security of the electronic device.

9. The electronic device of claim 8 wherein the DTMS is further configured to:
receive security threat information from one or more applications configured to execute on the electronic device; and
calculate the plurality of trust scores based on the security threat information from the one or more applications.

10. The electronic device of claim 8 wherein the processor comprises an operating system, one or more applications, and the device trust management system (DTMS), the DTMS configured to implement the one or more targeted security actions, wherein the one or more targeted security actions modify operations of the operating system, the one or more applications, or a combination thereof.

11. The electronic device of claim 8 wherein the processor comprises an operating system, one or more applications, and the device trust management system (DTMS), the DTMS configured to implement the one or more targeted security actions, wherein the one or more targeted security actions modify access, for at least one of the operating system or the one or more applications, to one or more of stored content in the memory, sensors of the electronic device, a communication network communicatively coupled to the electronic device, a remote host communicatively coupled to the electronic device, an input/output device communicatively coupled to the electronic device, or a combination thereof.

12. The electronic device of claim 8 wherein the processor comprises the device trust management service (DTMS) and at least one of an application or a service,
wherein the DTMS is configured to:
receive a query from the at least one of the application or the service for security threat information for the electronic device; and
provide the security threat information to the at least one of the application or the service; and
further wherein, the at least one of the application or the service is configured to implement the one or more targeted security actions, wherein the targeted security actions modify operations of the one or more applications.

13. The electronic device of claim 12 wherein the at least one of the application or the device trust management service includes at least one of a browser application, a media player application, or a network connection service.

14. The electronic device of claim 9, the processor further configured to monitor one or more of a location status, a user authentication status, a web access status, a malware status, a network connectivity status, an application threat status, or a combination thereof.

15. A non-transitory, processor-readable storage medium having stored thereon processor-readable instructions for providing security for an electronic device, the processor-readable instructions being configured to cause a processor of the electronic device to execute the method of any one of claims 1 to 7.

## Patentansprüche

1. Verfahren zum Bereitstellen von Sicherheit für ein elektronisches Gerät, das Folgendes beinhaltet:
Überwachen, durch das elektronische Gerät, eines Status des elektronischen Geräts auf eine oder mehrere Bedrohungen für die Sicherheit des elektronischen Geräts, wobei das Überwachen des Status des elektronischen Geräts das Überwachen eines Gerätenachweisstatus und/oder eines Hardware-Manipulationsstatus beinhaltet;
Erkennen, durch das elektronische Gerät, der ein oder mehreren Bedrohungen für die Sicherheit des elektronischen Geräts auf der Basis des Status des elektronischen Geräts und einer oder mehrerer mit dem elektronischen Gerät assoziierter Sicherheitsrichtlinien, wobei das Erkennen der ein oder mehreren Bedrohungen das Berechnen eines Benutzervertrauenswertes beinhaltet, der einen Grad an Gewissheit anzeigt, dass die Identität des Benutzers bekannt und verifiziert ist; und
Selbstdurchsetzen, durch das elektronische Gerät, der ein oder mehreren Sicherheitsrichtlinien durch Implementieren von einer oder mehreren gezielten Sicherheitsaktionen gemäß Anzeige durch die ein oder mehreren Sicherheitsrichtlinien, um den Status des elektronischen Geräts auf der Basis der erkannten ein oder mehreren Bedrohungen für die Sicherheit des elektronischen Geräts selektiv zu verändern;
und wobei der Erkennungsschritt Folgendes beinhaltet:
Berechnen, durch einen Gerätevertrauen-Verwaltungsdienst (DTMS) lokal zu dem elektronischen Gerät, mehrerer Vertrauenswerte auf der Basis des Status des elektronischen Geräts und der ein oder mehreren mit dem elektronischen Gerät assoziierten Sicherheitsrichtlinien, wobei die mehreren Vertrauenswerte einen Gerätevertrauenswert und den Benutzervertrauenswert umfassen;
Erkennen, durch den DTMS, der ein oder mehreren Bedrohungen für die Sicherheit des elektronischen Geräts auf der Basis der mehreren Vertrauenswerte und der ein oder mehreren Sicherheitsrichtlinien; und
Auswählen, durch den DTMS, der ein oder mehreren gezielten Sicherheitsaktionen auf der Basis der erkannten ein oder mehreren Bedrohungen für die Sicherheit des elektronischen Geräts.

2. Verfahren nach Anspruch 1, das ferner Folgendes beinhaltet:
Empfangen, durch den DTMS, von Sicherheitsbedrohungsinformationen von einer oder mehreren Anwendungen, die zum Ausführen auf dem elektronischen Gerät konfiguriert sind; und
Berechnen, durch den DTMS, der mehreren Vertrauenswerte auf der Basis der Sicherheitsbedrohungsinformationen von den ein oder mehreren Anwendungen.

3. Verfahren nach Anspruch 1, das ferner das Implementieren der ein oder mehreren gezielten Sicherheitsbewertungen durch einen Gerätevertrauen-Verwaltungsdienst lokal zu dem elektronischen Gerät beinhaltet, wobei die ein oder mehreren gezielten Sicherheitsaktionen Operationen eines Betriebssystems, eine oder mehrere Anwendungen oder eine Kombination davon modifizieren.

4. Verfahren nach Anspruch 1, das ferner das Implementieren der ein oder mehreren gezielten Sicherheitsaktionen durch einen Gerätevertrauen-Verwaltungsdienst lokal zu dem elektronischen Gerät beinhaltet, wobei die ein oder mehreren gezielten Sicherheitsaktionen Zugang, für ein Betriebssystem und/oder eine oder mehrere Anwendungen, zu einem oder mehreren aus gespeichertem Inhalt, Sensoren, einem Kommunikationsnetzwerk, einem fernen Host, einem Ein-/Ausgabegerät oder einer Kombination davon modifizieren.

5. Verfahren nach Anspruch 1, das ferner Folgendes beinhaltet:
Empfangen einer Anfrage von einer Anwendung und/oder einem Dienst, konfiguriert zum Ausführen auf dem elektronischen Gerät, an einem Gerätevertrauen-Verwaltungsdienst (DTMS) lokal zu dem elektronischen Gerät, für Sicherheitbedrohungsinformationen für das elektronische Gerät;
Bereitstellen der Sicherheitsbedrohungsinformationen der Anwendung und/oder dem Dienst durch den DTMS; und
Implementieren der ein oder mehreren gezielten Sicherheitsaktionen durch die Anwendung und/oder den Dienst, wobei die gezielten Sicherheitsaktionen Operationen der Anwendung und/oder des Dienstes modifizieren.

6. Verfahren nach Anspruch 5, das ferner das Implementieren der ein oder mehreren gezielten Sicherheitsaktionen durch wenigstens eines aus einer Browser-Anwendung, einer Media-Player-Anwendung und einem Netzwerkverbindungsdienst implementiert.

7. Verfahren nach Anspruch 1, wobei das Überwachen des Status des elektronischen Geräts das Überwachen von einem oder mehreren aus einem Standortstatus, einem Benutzerauthentifizierungsstatus, einem Web-Zugangsstatus, einem Malware-Status, einem Netzwerkverbindungsstatus, einem Anwendungsbedrohungsstatus und einer Kombination davon beinhaltet.

8. Elektronisches Gerät, das Folgendes umfasst:
einen Speicher; und
einen mit dem Speicher gekoppelten Prozessor, wobei der Prozessor konfiguriert ist zum:
Überwachen eines Status des elektronischen Geräts auf eine oder mehrere Bedrohungen für die Sicherheit des elektronischen Geräts, wobei der Prozessor zum Überwachen eines Gerätenachweisstatus und/oder eines Hardware-Manipulationsstatus konfiguriert ist;
Erkennen der ein oder mehreren Bedrohungen für die Sicherheit des elektronischen Geräts auf der Basis des Status des elektronischen Geräts und einer oder mehreren mit dem elektronischen Gerät assoziierten Sicherheitsrichtlinien, wobei der Prozessor ferner zum Berechnen eines Benutzervertrauenswertes konfiguriert ist, der einen Grad an Gewissheit anzeigt, dass die Identität des Benutzers bekannt und verifiziert ist; und
Selbstdurchsetzen der ein oder mehreren Sicherheitsrichtlinien, indem es ferner zum Implementieren von einer oder mehreren gezielten Sicherheitsaktionen wie durch die ein oder mehreren Sicherheitsrichtlinien angezeigt, zum selektiven Verändern des Status des elektronischen Geräts auf der Basis der erkannten ein oder mehreren Bedrohungen für die Sicherheit des elektronischen Geräts konfiguriert ist, wobei der Prozessor einen Gerätevertrauen-Verwaltungsdienst (DTMS) zum Erkennen der ein oder mehreren Bedrohungen für die Sicherheit des elektronischen Geräts umfasst, wobei der DTMS konfiguriert ist zum:
Berechnen mehrerer Vertrauenswerte auf der Basis des Status des elektronischen Geräts und der ein oder mehreren mit dem elektronischen Gerät assoziierten Sicherheitsrichtlinien, wobei die mehreren Vertrauenswerte einen Gerätevertrauenswert und den Benutzervertrauenswert umfassen;
Erkennen der ein oder mehreren Bedrohungen für die Sicherheit des elektronischen Geräts auf der Basis der ein oder mehreren Vertrauenswerte und der ein oder mehreren Sicherheitsrichtlinien; und
Auswählen der ein oder mehreren gezielten Sicherheitsaktionen auf der Basis der erkannten ein oder mehreren Bedrohungen für die Sicherheit des elektronischen Geräts.

9. Elektronisches Gerät nach Anspruch 8, wobei der DTMS ferner konfiguriert ist zum:
Empfangen von Sicherheitsbedrohungsinformationen von einer oder mehreren Anwendungen, die zum Ausführen auf dem elektronischen Gerät konfiguriert sind; und
Berechnen der mehreren Vertrauenswerte auf der Basis der Sicherheitsbedrohungsinformationen von den ein oder mehreren Anwendungen.

10. Elektronisches Gerät nach Anspruch 8, wobei der Prozessor ein Betriebssystem, eine oder mehrere Anwendungen und das Gerätevertrauen-Verwaltungssystem (DTMS) umfasst, wobei das DTMS zum Implementieren der ein oder mehreren gezielten Sicherheitsaktionen konfiguriert ist, wobei die ein oder mehreren gezielten Sicherheitsaktionen Operationen des Betriebssystems, der ein oder mehreren Anwendungen oder eine Kombination davon modifizieren.

11. Elektronisches Gerät nach Anspruch 8, wobei der Prozessor ein Betriebssystem, eine oder mehrere Anwendungen und das Gerätevertrauen-Verwaltungssystem (DTMS) umfasst, wobei das DTMS zum Implementieren der ein oder mehreren gezielten Sicherheitsaktionen konfiguriert ist, wobei die ein oder mehreren gezielten Sicherheitsaktionen Zugang, für das Betriebssystem und/oder die ein oder mehreren Anwendungen, zu einem oder mehreren aus gespeichertem Inhalt im Speicher, Sensoren des elektronischen Geräts, einem mit dem elektronischen Gerät kommunikativ gekoppelten Kommunikationsnetzwerk, einem mit dem elektronischen Gerät kommunikativ gekoppelten fernen Host, einem mit dem elektronischen Gerät kommunikativ gekoppelten Ein-/Ausgabegerät oder einer Kombination davon umfasst.

12. Elektronisches Gerät nach Anspruch 8, wobei der Prozessor den Gerätevertrauen-Verwaltungsdienst (DTMS) und eine Anwendung und/oder einen Dienst umfasst, wobei der DTMS konfiguriert ist zum:
Empfangen einer Anfrage von der Anwendung und/oder dem Dienst für Sicherheitbedrohungsinformationen für das elektronische Gerät; und
Bereitstellen der Sicherheitsbedrohungsinformationen der Anwendung und/oder dem Dienst; und
wobei ferner die Anwendung und/oder der Dienst zum Implementieren der ein oder mehreren gezielten Sicherheitsaktionen konfiguriert ist, wobei die gezielten Sicherheitsaktionen Operationen der ein oder mehreren Anwendungen modifizieren.

13. Elektronisches Gerät nach Anspruch 12, wobei die Anwendung und/oder der Gerätevertrauen-Verwaltungsdienst wenigstens eines aus einer Browser-Anwendung, einer Media-Player-Anwendung oder einem Netzwerkverbindungsdienst beinhaltet.

14. Elektronisches Gerät nach Anspruch 9, wobei der Prozessor ferner zum Überwachen von einem oder mehreren aus einem Standortstatus, einem Benutzerauthentifizierungsstatus, einem Web-Zugangsstatus, einem Malware-Status, einem Netzwerkverbindungsstatus, einem Anwendungsbedrohungsstatus oder einer Kombination davon konfiguriert ist.

15. Nichtflüchtiges, prozessorlesbares Speichermedium, auf dem prozessorlesbare Befehle zum Bereitstellen von Sicherheit für ein elektronisches Gerät gespeichert sind, wobei die prozessorlesbaren Befehle zum Bewirken konfiguriert sind, dass ein Prozessor des elektronischen Geräts das Verfahren nach einem der Ansprüche 1 bis 7 durchführt.

## Revendications

1. Procédé permettant d'assurer la sécurité d'un dispositif électronique comprenant :
la surveillance, par le dispositif électronique, d'un statut du dispositif électronique relativement à une ou plusieurs menaces envers une sécurité du dispositif électronique, la surveillance du statut du dispositif électronique comprenant la surveillance d'un ou plusieurs d'un statut d'attestation de dispositif ou d'un statut d'altération de matériel ;
la détection, par le dispositif électronique, des une ou plusieurs menaces envers la sécurité du dispositif électronique en fonction du statut du dispositif électronique et d'une ou plusieurs politiques de sécurité associées au dispositif électronique, la détection des unes ou plusieurs menaces comprenant le calcul d'un score de confiance d'utilisateur indicatif d'un niveau de certitude de connaissance et de vérification de l'identité de l'utilisateur ; et
l'auto-application, par le dispositif électronique, des une ou plusieurs politiques de sécurité en mettant en œuvre une ou plusieurs actions de sécurité ciblées, telles qu'indiquées par les une ou plusieurs politiques de sécurité, pour sélectivement modifier le statut du dispositif électronique en fonction des une ou plusieurs menaces détectées envers la sécurité du dispositif électronique ;
et dans lequel l'étape de détection comprend:
le calcul, par un service de gestion de confiance de dispositif (DTMS) local au dispositif électronique, d'une pluralité de scores de confiance en fonction du statut du dispositif électronique et des une ou plusieurs politiques de sécurité associées au dispositif électronique, la pluralité de scores de confiance comprenant un score de confiance de dispositif et le score de confiance d'utilisateur ;
la détection, par le DTMS, des une ou plusieurs menaces envers la sécurité du dispositif électronique sur la base de la pluralité de scores de confiance et des une ou plusieurs politiques de sécurité ; et
la sélection, par le DTMS, des une ou plusieurs actions de sécurité ciblées en fonction des une ou plusieurs menaces détectées envers la sécurité du dispositif électronique.

2. Procédé selon la revendication 1 comprenant en outre :
la réception, par le DTMS, d'informations de menaces envers la sécurité en provenance d'une ou plusieurs applications configurées pour être exécutées sur le dispositif électronique ; et
le calcul, par le DTMS, de la pluralité de scores de confiance en fonction des informations de menaces envers la sécurité en provenance des une ou plusieurs applications.

3. Procédé selon la revendication 1 comprenant en outre la mise en œuvre des une ou plusieurs actions de sécurité ciblées par un service de gestion de confiance de dispositif local au dispositif électronique, les une ou plusieurs actions de sécurité ciblées modifiant des opérations d'un système d'exploitation, d'une ou plusieurs applications, ou d'une combinaison de ceux-ci.

4. Procédé selon la revendication 1 comprenant en outre la mise en œuvre des une ou plusieurs actions de sécurité ciblées par un service de gestion de confiance de dispositif local au dispositif électronique, les une ou plusieurs actions de sécurité ciblées modifiant l'accès, pour au moins un d'un système d'exploitation ou d'une ou plusieurs applications, à un ou plusieurs d'un contenu mémorisé, de capteurs, d'un réseau de communication, d'un hôte distant, d'un dispositif d'entrée/sortie, ou d'une combinaison de ceux-ci.

5. Procédé selon la revendication 1 comprenant en outre :
la réception d'une interrogation en provenance d'au moins un d'une application ou d'un service configuré pour être exécuté sur le dispositif électronique, au niveau d'un service de gestion de confiance de dispositif (DTMS) local au dispositif électronique, portant sur des informations de menaces envers la sécurité du dispositif électronique ;
la fourniture, par le DTMS, des informations de menaces envers la sécurité à l'au moins un de l'application ou du service ; et
la mise en œuvre des une ou plusieurs actions de sécurité ciblées par l'au moins un de l'application ou du service, les actions de sécurité ciblées modifiant des opérations de l'au moins un de l'application ou du service.

6. Procédé selon la revendication 5 comprenant en outre la mise en œuvre des une ou plusieurs actions de sécurité ciblées par au moins un d'une application de navigateur, d'une application de lecteur multimédia, ou d'un service de connexion réseau.

7. Procédé selon la revendication 1 dans lequel la surveillance du statut du dispositif électronique comprend la surveillance d'un ou plusieurs d'un statut d'emplacement, d'un statut d'authentification d'utilisateur, d'un statut d'accès à la Toile, d'un statut de maliciel, d'un statut de connectivité réseau, d'un statut de menace d'application ou d'une combinaison de ceux-ci.

8. Dispositif électronique comprenant :
une mémoire ; et
un processeur couplé à la mémoire, le processeur étant configuré pour :
surveiller un statut du dispositif électronique relativement à une ou plusieurs menaces envers la sécurité du dispositif électronique, le processeur étant configuré pour surveiller un ou plusieurs d'un statut d'attestation de dispositif ou d'un statut d'altération de matériel ;
détecter les une ou plusieurs menaces envers la sécurité du dispositif électronique en fonction du statut du dispositif électronique et d'une ou plusieurs politiques de sécurité associées au dispositif électronique, le processeur étant configuré en outre pour calculer un score de confiance d'utilisateur indicatif d'un niveau de certitude de connaissance et de vérification de l'identité de l'utilisateur ; et
auto-appliquer les une ou plusieurs politiques de sécurité, étant configuré en outre pour mettre en œuvre une ou plusieurs actions de sécurité ciblées, telles qu'indiquées par les une ou plusieurs politiques de sécurité, pour sélectivement modifier le statut du dispositif électronique, en fonction des une ou plusieurs menaces détectées envers la sécurité du dispositif électronique, dans lequel le processeur comprend un service de gestion de confiance de dispositif (DTMS) pour détecter les une ou plusieurs menaces envers la sécurité du dispositif électronique, le DTMS étant configuré pour
calculer une pluralité de scores de confiance en fonction du statut du dispositif électronique et des une ou plusieurs politiques de sécurité associées au dispositif électronique, la pluralité de scores de confiance comprenant un score de confiance de dispositif et le score de confiance d'utilisateur ;
détecter les une ou plusieurs menaces envers la sécurité du dispositif électronique sur la base de la pluralité de scores de confiance et des une ou plusieurs politiques de sécurité ; et
sélectionner les une ou plusieurs actions de sécurité ciblées en fonction des une ou plusieurs menaces détectées envers la sécurité du dispositif électronique.

9. Dispositif électronique selon la revendication 8 dans lequel le DTMS est configuré en outre pour :
recevoir des informations de menaces envers la sécurité en provenance d'une ou plusieurs applications configurées pour être exécutées sur le dispositif électronique ; et
calculer la pluralité de scores de confiance en fonction des informations de menaces envers la sécurité en provenance des une ou plusieurs applications.

10. Dispositif électronique selon la revendication 8 dans lequel le processeur comprend un système d'exploitation, une ou plusieurs applications, et le système de gestion de confiance de dispositif (DTMS), le DTMS étant configuré pour mettre en œuvre les une ou plusieurs actions de sécurité ciblées, les une ou plusieurs actions de sécurité ciblées modifiant des opérations du système d'exploitation, des une ou plusieurs applications, ou d'une combinaison de ceux-ci.

11. Dispositif électronique selon la revendication 8 dans lequel le processeur comprend un système d'exploitation, une ou plusieurs applications, et le système de gestion de confiance de dispositif (DTMS), le DTMS étant configuré pour mettre en œuvre les une ou plusieurs actions de sécurité ciblées, les une ou plusieurs actions de sécurité ciblées modifiant l'accès, pour au moins un du système d'exploitation ou des une ou plusieurs applications, à un ou plusieurs d'un contenu mémorisé dans la mémoire, de capteurs du dispositif électronique, d'un réseau de communication couplé en communication au dispositif électronique, d'un hôte distant couplé en communication au dispositif électronique, d'un dispositif d'entrée/sortie couplé en communication au dispositif électronique, ou d'une combinaison de ceux-ci.

12. Dispositif électronique selon la revendication 8 dans lequel le processeur comprend le service de gestion de confiance de dispositif (DTMS) et au moins un d'une application ou d'un service,
dans lequel le DTMS est configuré pour :
recevoir une interrogation en provenance d'au moins un de l'application ou du service portant sur des informations de menaces envers la sécurité du dispositif électronique ; et
fournir les informations de menaces envers la sécurité à l'au moins un de l'application ou du service ; et
dans lequel en outre l'au moins un de l'application ou du service est configuré pour mettre en œuvre les une ou plusieurs actions de sécurité ciblées, les actions de sécurité ciblées modifiant des opérations des une ou plusieurs applications.

13. Dispositif électronique selon la revendication 12 dans lequel l'au moins un de l'application ou du service de gestion de confiance de dispositif comporte au moins un d'une application de navigateur, d'une application de lecteur multimédia ou d'un service de connexion réseau.

14. Dispositif électronique selon la revendication 9, le processeur étant configuré en outre pour surveiller un ou plusieurs d'un statut d'emplacement, d'un statut d'authentification d'utilisateur, d'un statut d'accès à la Toile, d'un statut de maliciel, d'un statut de connectivité réseau, d'un statut de menace d'application ou d'une combinaison de ceux-ci.

15. Support de mémorisation non transitoire, lisible par processeur sur lequel sont mémorisées des instructions lisibles par processeur pour assurer la sécurité d'un dispositif électronique, les instructions lisibles par processeur étant configurées pour amener un processeur du dispositif électronique à exécuter le procédé selon l'une quelconque des revendications 1 à 7.
